# EUROPÄISCHE PATENTSCHRIFT

(11) **EP 2 423 923 B1**
(45) Veröffentlichungstag und Bekanntmachung des Hinweises auf die Patenterteilung: **10.02.2016**
(21) Anmeldenummer: 11005667.8
(22) Anmeldetag: 11.07.2011
(51) Int. Cl.: G21C 9/00, G21C 9/004, G21F 7/015, G21F 9/02, B01D 46/00, B01D 53/04, B01D 53/26

(54) **Verfahren zur Druckentlastung eines Kernkraftwerks, Druckentlastungssystem für ein Kernkraftwerk sowie zugehöriges Kernkraftwerk**
Method for releasing pressure of a nuclear power plant, pressure release system for a nuclear power plant and nuclear power plant
Procédé de dépressurisation d'une centrale nucléaire, système de détente pour une centrale nucléaire ainsi que la centrale nucléaire correspondante

(30) Priorität: 25.08.2010 DE 102010035510
(43) Veröffentlichungstag der Anmeldung: 29.02.2012
(73) Patentinhaber: AREVA GmbH, 91052 Erlangen (DE)
(72) Erfinder: Eckardt, Bernd, 63486 Bruchköbel (DE); Losch, Norbert, 63071 0ffenbach (DE); Pasler, Carsten, 63110 Rodgau (DE)
(74) Vertreter: Walkenhorst, Andreas

(56) Entgegenhaltungen:
- WO-A1-98/35744
- WO-A2-2004/114322
- DE-A1- 3 815 850
- US-A- 3 964 887

## Beschreibung

Die Erfindung betrifft ein Verfahren zur Druckentlastung eines Kernkraftwerks mit einer Sicherheitshülle zum Einschluss von Aktivitätsträgern und mit einem Auslass für einen Entlastungsstrom, wobei der Entlastungsstrom über eine mit einem Filtersystem versehene Entlastungsleitung aus der Sicherheitshülle in die Atmosphäre geführt wird, wobei das Filtersystem eine Filterkammer mit einem Filterkammereinlass, einem Filterkammerauslass und einem dazwischen liegenden Sorbensfilter umfasst, wobei der Entlastungstrom in einem Hochdruckabschnitt der Entlastungsleitung zumindest teilweise an der Filterkammer vorbei geführt wird und diese dabei durch Wärmeübertrag beheizt wird, und wobei der Entlastungsstrom am Ende des Hochdruckabschnitts durch Expansion an einer Drossel entspannt und getrocknet wird.

Die Erfindung betrifft weiterhin ein entsprechendes Druckentlastungssystem für ein Kernkraftwerk mit einer Sicherheitshülle zum Einschluss von Aktivitätsträgern und mit einem Auslass für einen Entlastungsstrom, wobei an den Auslass eine mit einem Filtersystem versehene Entlastungsleitung angeschlossen ist, wobei das Filtersystem eine Filterkammer mit einem Filterkammereinlass, einem Filterkammerauslass und einem dazwischen liegenden Sorbensfilter umfasst, wobei die Entlastungsleitung einen Hochdruckabschnitt umfasst, der zumindest in einem Teilabschnitt an der Filterkammer vorbei geführt ist und mit dieser über Wärmetauscherflächen in thermischer Wechselwirkung steht, und wobei am Ende des Hochdruckabschnitts eine Drossel in die Entlastungsleitung geschaltet ist.

Die Erfindung betrifft schließlich ein Kernkraftwerk mit einem derartigen Druckentlastungssystem.

Zur Zurückhaltung von bei Havariezuständen, insbesondere im unwahrscheinlichen Fall von Kernschmelze, entstehenden aktiven Gasen oder Dämpfen sind Kernkraftwerke üblicherweise mit einer vergleichsweise massiven, hermetisch gegenüber der Außenwelt verschlossenen Sicherheitshülle aus Beton, Stahlbeton oder Stahl umgeben, die auch als Containment bezeichnet wird. Üblicherweise sind derartige Sicherheitshüllen dafür ausgelegt, auch hohen Innendrücken, wie sie etwa bei einer Knallgasexplosion oder bei massiver Freisetzung von Kühlmitteldampf aus dem Kühlmittelkreislauf auftreten können, standzuhalten.

Untersuchungen zum Containmentverhalten unter deutlich erhöhten Unfalldrücken haben jedoch gezeigt, dass in ungünstigen Situationen aufgrund entstehender Leckstellen möglicherweise eine relevante Freisetzung von vergleichsweise stark kontaminierter Atmosphäre in die Umgebung erfolgen kann. Zur Minimierung von solch ungefilterten Leckagen ist es sehr vorteilhaft, wenn eine weitgehende Druckentlastung bis auf geringe Überdrücke, oder sogar auf Umgebungsdruck, durchgeführt werden kann. Dies ist insbesondere bei Containments von signifikanter Bedeutung, für die in solchen Überdruckphasen eine Rissbildung aufgrund der Konstruktion wahrscheinlicher wird, wie z. B. bei Betoncontainment oder in sensitiven Dichtungsbereichen, wie Schleusen, etc.

In zahlreichen Kernkraftwerken sind daher bereits unterschiedliche Systeme zur Überdruckbegrenzung und (gefilterten) Druckentlastung des Containments in Unfallsituationen installiert. Diese Einrichtungen ermöglichen die Rückhaltung der Aerosole und teilweise auch des elementaren Jodes. Eine effektive Rückhaltung von Organojod aus diesem Entlastungsstrom - im passiven Betrieb ohne Fremdenergiezufuhr - ist bislang nicht möglich. Neuere Erkenntnisse in der Unfallforschung zeigen jedoch, dass in solchen Ereignissen insbesondere der emittierte Organojodanteil wesentlich zur Strahlenbelastung der Bevölkerung beitragen kann und somit risikorelevant ist. Unter Organojod wird im Rahmen dieser Anmeldung insbesondere Jod in Form von organischen Verbindungen niederer Kohlenstoffzahl, wie Methyljodid, etc. verstanden.

Beispielsweise wird bei dem eingangs genannten Verfahren gemäß der internationalen Offenlegungsschrift WO 90/16071 und der zugehörigen apparativen Einrichtung ein durch eine Entlastungsleitung aus der Sicherheitshülle ausströmender, unter vergleichsweise hohem Druck stehender Entlastungsstrom nach seiner Entspannung und Expansionstrocknung durch ein auch als Drossel bezeichnetes Drosselventil durch eine Filterkammer mit einem Sorbensfilter geleitet. Derartige Sorbensfilter werden auch als Molekularsiebe oder kurz Molsiebe bezeichnet und halten das elementare Jod im Entlastungsstrom durch Sorbtion vergleichsweise gut zurück, wenn die Betriebsbedingungen derart gewählt sind, dass es zu keiner Auskondensation des Entlastungsstroms im Molekularsieb kommt. Im Feuchtbetrieb hingegen kann es zur Zerstörung oder irreversiblen "Verstopfung" der empfindlichen Filterflächen kommen.

Um dies zu vermeiden, wird gemäß WO 90/16071 eine hinreichend hohe Betriebstemperatur des Jodsorbensfilters, insbesondere mit Silbernitratauflage, dadurch sichergestellt, dass der vergleichsweise warme Entlastungsstrom im Hochdruckabschnitt der Entlastungsleitung, also stromaufwärts der Drossel, an der Filterkammer vorbei (oder auch durch Beheizungsrohre durch einzelne Filterelemente hindurch) geleitet wird und diese dabei durch Wärmeübertrag vorheizt. Die Einrichtung ist kombinierbar mit einer vorgeschalteten Grob- und Feinfilterung, einem Metallfasersieb zur Gasentfeuchtung, und zusätzlich mit einem frei ausblasenden Venturiwäscher. Der erzielte Taupunktabstand des Entlastungsstroms im Niederdruckabschnitt ist im Wesentlichen durch die (theoretische) Drosseltemperatur festgelegt und beträgt hier konstruktionsbedingt nur rund 5 °C. Die Rückhaltung von Organojod ist, wie oben bereits erwähnt, gemäß jüngeren Untersuchungen nicht zufriedenstellend, jedenfalls nicht bei ökonomisch vertretbarer Betriebsweise ohne Fremdenergieeinsatz.

Weiterhin treten besonders in Abschaltphasen (kein Durchfluss) durch den Zerfall der eingelagerten Aktivitäten erhebliche Nachwärmemengen auf. Dies kann zu einer relevanten Aufwärmung des Molekularsiebes führen, wobei bereits bei einer Betriebstemperatur von ca. 210 °C eine Zerstörung der Mikrokristalle durch Schmelze der Silbernitratauflage erfolgt und somit die Abscheidewirkung verloren geht und eine Aktivitätsfreisetzung auftritt.

Der Vorgang des Druckabbaus in der Sicherheitshülle durch (gefiltertes) Ausblasen von unter Überdruck stehendem Gas oder Dampf in die Atmosphäre wird auch als Venting bezeichnet. Dementsprechend wird der Entlastungsstrom auch als Ventgasstrom oder ähnlich bezeichnet.

In der Auslegung und den möglichen Aktivitätsabgaben unterscheiden sich die heutzutage betriebenen Anlagen von den neuen Reaktoren der dritten Generation (GEN 3) deutlich, da bei letzteren bereits die Kernschmelze in der Auslegung berücksichtigt wurde. Bereits nachgerüstete Einrichtungen, wie z. B. Wäscher oder Sandbettfilterkombinationen, lösen das neu zu bewertende Problem der Organojodrückhaltung und die anzustrebende weitgehende Druckentlastung für sich genommen nicht, insbesondere wegen der hohen erforderlichen Treibdrücke in Wäschern und der geringen Reaktionsflächen zum Stoffaustausch in der Flüssigkeitsphase sowie der sehr geringen Abscheidewirkung für Jod in Sandbetten oder Molekularsieben im Feuchtbetrieb. Eine Verbesserung dieser Einrichtungen, auch in bereits bestehenden Anlagen, ist zur Erreichung der höheren Sicherheitsstandards dieser Kernkraftwerke von essentieller Bedeutung.

Eine quantitative Abscheidung aller luftgetragenen Aerosol- und Jodaktivitäten würde auch eine wesentliche Kostenreduktion in GEN3-Anlagen ermöglichen, da die nicht rückhaltbaren Edelgasaktivitäten im Tagebereich zerfallen und somit eine mittelfristige Druckentlastung - ohne relevante Freisetzungen - möglich wird. Dies ermöglicht ein vereinfachte Auslegung des Containments und der zugehörigen Sicherheitssysteme und in der Folge erhebliche Kostenreduktionen.

Der vorliegenden Erfindung liegt daher die Aufgabe zugrunde, ein Verfahren zur Druckentlastung eines Kernkraftwerks der eingangs genannten Art anzugeben, das für eine besonders effiziente und wirksame Rückhaltung von im Entlastungsstrom enthaltenen Aktivitätsträgern, insbesondere von jodhaltigen organischen Verbindungen, ausgelegt ist. Es soll weiterhin ein zur Durchführung des Verfahrens besonders geeignetes Druckentlastungssystem für ein Kernkraftwerk angegeben werden.

Hinsichtlich des Verfahrens wird diese Aufgabe gemäß Anspruch 1 dadurch gelöst, dass der Entlastungsstrom in einem Niederdruckabschnitt stromabwärts der Drossel durch einen Sand- oder Kiesbettfilter geleitet wird, anschließend in einem Überhitzungsabschnitt an dem Hochdruckabschnitt der Entlastungsleitung vorbeigeführt und dabei durch Wärmeübertrag erhitzt wird, direkt anschließend in diesem Zustand durch die Filterkammer mit dem Sorbensfilter hindurch geleitet wird, und schließlich in die Atmosphäre ausgeblasen wird.

Überraschenderweise wurde gefunden, dass die starke Aktivität eines Gasstromes beim Druckentlasten eines Sicherheitseinschlusses durch eine der Drossel nachgeschaltete, besonders wirksame passiv-regenerative Gasüberhitzung, mittels Wärmeübertrag aus dem Überdruckbereich in den atmosphärischen Bereich und eine anschließende Sorbensfilterung hocheffektiv zurückgehalten werden kann.

Die auch als Drosselventil oder Expansionsventil bezeichnete Drossel bewirkt eine erste Trocknung des Entlastungstroms infolge von Expansion, wobei die theoretische Drosseltemperatur durch noch enthaltene Gasfeuchten und nicht ideale Drosselung, je nach Betriebsphase, auch gravierend unterschritten werden kann. Stromabwärts der Drossel erfolgt eine Feinfeststoff-Filterung mittels eines Feststoff-Filters, wie etwa Sandbettfilter oder Kiesbettfilter. Im nachgeschalteten Überhitzungsabschnitt erfolgt dann - weitgehend unabhängig von der Effektivität der Expansionstrocknung - die entscheidende Überhitzung des Entlastungsstroms, durch die ein Auskondensieren im Bereich des feuchteempfindlichen Jodsorbensfilters auch unter ungünstigen Betriebsbedingungen sicher vermieden wird. Aufgrund der vorherigen Filterung im Sand- oder Kiesbettfilter ist eine wirksame Wärmeübertragung auf den teilgereinigten Entlastungsstrom an den entsprechenden Wärmetauscherflächen des Überhitzungsabschnitts gewährleistet. Durch die effektive Ausnutzung des im Hochdruckbereich der Entlastungsleitung vorhandenen Wärmeüberschusses zur Vorwärmung der Filterkammer einerseits und zur direkten Erwärmung des entspannten Entlastungsstroms unmittelbar vor seinem Filterkammereintritt andererseits kann gemäß dem Prinzip der regenerativen Wärmerückgewinnung mit Eigenmedium-Beheizung ein Einsatz von Fremdenergie, etwa in Form elektrischer Heizeinrichtungen, entfallen. Damit ist das Verfahren nicht nur hocheffektiv, sondern auch besonders energieeffizient.

Vorteilhafterweise wird der Entlastungsstrom im Überhitzungsabschnitt auf eine Temperatur erhitzt, die - bei unterstellen Auslegungs-Störfallbedingungen - mindestens 10 °C, vorzugsweise 20 °C bis 50 °C, über der dort vorliegenden Taupunkttemperatur liegt. Als Taupunkt oder Taupunkttemperatur bezeichnet man diejenige Temperatur, bei der sich im Entlastungsstrom ein Gleichgewichtszustand von kondensierendem und verdunstendem Wasser einstellt, mit anderen Worten die Kondensatbildung gerade einsetzt. Wie sich überraschenderweise herausgestellt hat, nimmt bei einem Taupunktabstand von > 10 °C, vorzugsweise > 20 °C, auch bei nur teilweise durch den Sandbettfilter gereinigtem, stark dampfhaltigem Entlastungsstrom der Abscheidegrad für Organojod, insbesondere bei Verwendung von nicht wasserlöslichen Silberauflagen, sprunghaft zu und erreicht beispielsweise bei solchen Sorbensmaterialien auf Zeolith-Basis typischerweise Werte von bis zu 99,99 %.

Zwar würde für ein hocheffektives Molekularsieb mit (wasserlöslicher) SilbernitratAuflage unter Umständen bereits eine geringere Überhitzung von beispielsweise 5 °C über dem Taupunkt zur effektiven Organojod-Rückhaltung mit hohen Rückhalteraten ausreichen. Es hat sich jedoch gezeigt, dass ein solcher Prozess bei den aus dem Stand der Technik bekannten Anlagen stark abhängig vom weitgehenden Erreichen der theoretischen Drosseltemperatur ist, und von der Vermeidung von jeglichen Restfeuchtegehalten im Gas, die die Überhitzung gravierend minimieren, abhängt. Unter Berücksichtigung dieser neuen Erkenntnisse kann eine derartige Anlage herkömmlicher Bauart, wie sie beispielsweise aus der eingangs erwähnten WO 90/16071 bekannt ist, mit den ihr immanenten geringen Überhitzungen nicht effektiv und sicher betrieben werden. Hier schafft erst das erfindungsgemäße Konzept wirksame Abhilfe.

Bevorzugt wird die genannte Temperaturüberhöhung von mindestens 20 °C, besonders bevorzugt mindestens 50 °C über der Taupunkttemperatur im Volllastbetrieb des Druckentlastungssystems erreicht. Darunter ist der anfängliche Entlastungsbetrieb nach einem auslegungsgemäßen Störfall zu verstehen, wenn der Druck im Inneren des Containments am höchsten ist und typischerweise - je nach Reaktor- und Containment-Typ - etwa 3 bis 8 bar bar beträgt. Dabei werden Ventgas-Massenströme von typischerweise etwa 3 bis 10 kg/s erreicht. Die Taupunkttemperatur im Bereich des Sorbensfilters beträgt dann typischerweise je nach Dampfgehalt rund 80 bis 100 °C, so dass die Temperatur des Ventgases nach erfolgter Überhitzung beim Eintritt in den Sorbensfilter vorzugsweise rund 100 bis 170 °C beträgt. Im Teillastbetrieb, wenn die Ventgas-Massenströme rund 25 % der entsprechenden Werte im Volllastbetrieb betragen, beträgt die Temperaturerhöhung vorzugsweise immer noch mindestens 10 °C.

Besonders effektiv und kompakt kann hierbei die Jodsoptionsfilterung mit gleitender Überhitzung und inversen Verweilzeiten (kurze Verweilzeit bei hoher Überhitzung und lange Verweilzeiten bei geringerer Überhitzung) bis nahezu Atmosphärendruck - ohne Hilfsenergie - betrieben werden. Hierbei werden, im Falle hohen Containmentdruckes, nach der Drosselung ein hoher Volumenstrom erzeugt und trotz der resultierenden geringen Sorptionsfilterverweilzeiten, aufgrund der nun hohen Gasüberhitzung am Sorbens, optimale Reaktionsbedingungen bei gleichzeitig erhöhter Diffusion erreicht. Bei geringem Containmentdruck, beispielsweise einem Viertel des anfänglichen Maximaldrucks von z. B. 5 bar absolut wird nach der Drosselung auf nahezu atmosphärischen Druck ein geringer Volumenstrom mit reduzierter Gasüberhitzung erzeugt, aber aufgrund der nun rund (vierfach) höheren Sorptionsfilterverweilzeit, trotz ungünstiger Sorptionsbedingungen, ebenfalls eine effektive Jodsorption ermöglicht. Eine effektive Sorptionsfilterung ist hierdurch auch bis zur völligen Druckentlastung und bei Containment-Temperaturen von nur 50 °C bis 100 °C, aufgrund der nun noch weiter ansteigenden Sorptionsfilterverweilzeit, möglich.

Besonders bei geringem Containmentdruck, z. B. weniger als 1 bar Überdruck gegenüber der Atmosphäre, kann effektiv durch eine zwischen die Drossel und den Überhitzungsabschnitt geschaltete Kühlung/Trocknung, durch entsprechende Wärmeabgabe an die Umgebung, z. B. mittels Sandbettfilter, Rohrleitungen, Trocknungskühler durch Umgebungsluft, jeweils eine Teilkondensation/Entfeuchtung und damit Taupunktabsenkung im Entlastungsgasstrom erfolgen. Hierdurch wird selbst bei reduzierten Containment-Temperaturen, mit entsprechend geringem Temperaturniveau im Regenerativwärmetauscher (Überhitzungsabschnitt), stets die notwendige Überhitzung passiv eingestellt und die optimale Jodrückhaltung am Sorbens ermöglicht.

Die Anordnung des den Überhitzungsabschnitt bildenden Regenerativwärmetauschers und der Filterkammer mit dem Sorbensfilter erfolgt für einen guten Wärmeübertrag vorzugsweise in unmittelbarer Nähe mit Abständen < 5 m, oder günstigerweise integriert innerhalb einer Komponente. Hierbei kann die Kombination innerhalb eines Druckbehälters in verschiedenen Kammern angeordnet werden, um Wärmeverluste und Aufwand zu minimieren und die optimalen Überhitzungs- und Reaktionsbedingungen sicherzustellen.

Vorzugsweise erfolgt die Anordnung des Sorbensfilters in einer die Zentralkammer umgebenden Ringkammer mit bereits integrierter Gasbeheizung durch die Wärmetauscherrohre. Die Ringkammer weist beispielsweise Lochrohrblechsiebe mit dem Sorbens auf. Eine Sorbensabrieb-Rückhaltung mittels Faserfilter kann dem Sorbensfilter nachgeschaltet sein. Alternativ kann eine weitgehend drucklose Flachfilterkammerkonstruktion mit zwischengeschalteten Regenerativwärmetauscher-Elementen vorgesehen sein. Hierbei ist ein modularer Aufbau durch Zusammenfügen von mehreren Modulen möglich. Die Beheizung der Sorptionseinheit erfolgt hier unmittelbar vor dem Durchströmen; günstigerweise sind die Filterkammern noch teilweise medium-außenbeheizt.

In besonders vorteilhafter Ausgestaltung wird der Entlastungsstrom im Hochdruckabschnitt zumindest teilweise durch eine Zentralkammer geleitet, die von der Filterkammer umgeben ist oder an sie angrenzt, wobei der Entlastungsstrom im Überhitzungsabschnitt durch zumindest teilweise in der Zentralkammer angeordnete Wärmetauscherelemente, insbesondere Wärmetauscherrohre, geleitet wird. Das heißt, der stromaufwärts der Drossel noch unter Hochdruck stehende, heiße Entlastungsstrom (ggf. auch nur ein Teilstrom desselben) gibt einen wesentlichen Teil seiner Wärme sowohl nach außen an die umliegende Filterkammer zur Vorwärmung der Sorbens-Filterelemente als auch an den in den Wärmetauscherrohren geführten, bereits entspannten Entlastungstrom ab, der unmittelbar nach der dadurch bewirkten Überhitzung in die Filterkammer mit dem Sorbensfilter eingeleitet und dort im überhitzten Zustand gefiltert wird.

In apparativer Hinsicht heißt das, dass die Filterkammer zweckmäßigerweise eine zur Durchleitung des Entlastungsstroms im Hochdruckabschnitt vorgesehene Zentralkammer umgibt oder an sie angrenzt, wobei die Entlastungsleitung im Bereich des Überhitzungsabschnitts eine Anzahl von in der Zentralkammer angeordneten oder in diese hineinragenden Wärmetauscherelementen aufweist.

Für eine besonders effektive Wärmeübertragung sind die Wärmetauscherelemente bevorzugt als Wärmetauscherrohre ausgebildet und zweckmäßigerweise an ihrer Außenseite mit in regelmäßigen Abständen angeordneten, umlaufenden oder in Längsrichtung verlaufenden Rippen oder Vorsprüngen versehen.

Vorteilhafterweise wird der Entlastungsstrom im Überhitzungsabschnitt im Gegenstrom oder Kreuzgegenstrom zu dem Entlastungsstrom im Hochdruckabschnitt geführt. In apparativer Hinsicht heißt das beispielsweise, dass die den Überhitzungsabschnitt bildenden Wärmetauscherrohre mit entsprechender Ausrichtung, etwa als im Wesentlichen vertikale Rohre oder als zickzackförmig gebogene Rohre, in der Zentralkammer angeordnet sind oder in sie hineinragen.

In weiterer vorteilhafter Ausgestaltung weist die Zentralkammer einen Zentralkammereinlass auf, durch den der Entlastungsstrom im Hochdruckabschnitt in die Zentralkammer eingeleitet wird, und wobei an ein mit der Zentralkammer verbundenes Kondensatsammelbecken eine Kondensatrückführleitung angeschlossen ist, deren anderes Ende mit einer im Bereich des Zentralkammereinlasses angeordneten Kondensateinsprühvorrichtung, insbesondere einer Düse, verbunden ist. Dabei wird sich in der Zentralkammer bildendes Kondensat in dem Kondensatsammelbecken gesammelt und zumindest teilweise zu dem Zentralkammereinlass zurückgeführt und als Tröpfchenregen oder Sprühnebel eingedüst.

Diese Ausgestaltung beruht auf dem Grundgedanken, dass der Wärmetauscherwirkungsgrad bei Anfall von relevanten Mengen von löslichen und/oder unlöslichen Aerosolen im Entlastungstrom grundsätzlich in unerwünschter Weise reduziert werden könnte. Um dies zu vermeiden und stattdessen einen effektiven Wärmeaustausch, auch im nur teilgereinigten Rohgas, zu erzielen, wird durch die oben genannte Kondensatrückführung und das Einsprühen von Kondensat als Tröpfchenregen oder Sprühnebel bereits betrieblich eine permanente Heizflächenreinigung am den Wärmetauscherelementen sichergestellt und damit der erforderliche Wirkungsgrad der regenerativen Gasüberhitzung gewährleistet.

Das Druckentlastungssystem wird also bevorzugt gezielt in einer Weise betrieben, bei der es zu einem nennenswerten Kondensatanfall in dem die Wärmetauscherelemente umgebenden Konvektionsteil kommt, insbesondere bei vergleichsweise hohen Gasgeschwindigkeiten des Entlastungsstroms im Hochdruckabschnitt. Durch passive Benetzung und zusätzliche Spülung der druckgasseitigen Heiz- bzw. Austauschflächen mit dem teilweise rückgeführten Kondensat wird in der Kombination mit den erhöhten Gasgeschwindigkeiten der gewünschte Reinigungseffekt erreicht.

Hierbei kann durch gezielte Gaseinschnürung im Überdruckanströmbereich, das heißt durch eine Querschnittsverengung in dem entsprechenden Abschnitt der Entlastungsleitung, eine Ansaugung des anfallenden Kondensates aus der Rückführleitung bzw. dem Sammelbecken erfolgen und durch Eindüsung in den zuströmenden Gasstrom dieser auf Sattdampfbedingungen gebracht und günstigerweise mit zusätzlichen Wassertröpfchen angereichert werden. Hierdurch wird im Wärmetauscher die Überhitzungszone minimiert und durch weiteres Kondensat eine Ablagerung der löslichen Aerosole quantitativ, der nicht löslichen Aerosole im wesentlichen Umfange, vermieden.

In Fällen mit besonders hohem Aerosolanfall kann auch durch passives und zyklisches Beaufschlagen eines Wasserreservoirs mittels einer Druckluftspeichereinrichtung eine kurzzeitige Hochdruckwassereinsprühung erfolgen und somit eine effektive Heizflächenreinigung an den Wärmetauscherelementen durchgeführt werden.

Eine weitere vorteilhafte Ausgestaltung, die mit der oben beschriebenen Kondensateinsprühung kombiniert werden kann, aber auch alleine einsetzbar ist, beruht auf dem Grundgedanken, die Aerosolkonzentration des Entlastungsstroms bereits vor Eintritt in den Wärmetauscher wesentlich zu reduzieren und somit einer Effektivitätsminderung der Wärmeübertragung infolge von Aerosolablagerung an den Wärmetauscherflächen bereits im Ansatz entgegen zu wirken.

Hierbei erfolgt gezielt im Hochdruckabschnitt des Hauptgasstromes bei erhöhten Strömungsgeschwindigkeiten in der Rohrleitung von z. B. > 50 m/s die Entnahme des für die Beheizung vorgesehenen Teilgasstromes. Diese Entnahme erfolgt gezielt entgegen der Strömungsrichtung des Hauptgasstroms, wiederum bei hohen Gasgeschwindigkeiten von z. B. > 50 m/s, so dass durch die spontan erzwungene Strömungsumkehr eine erhebliche Massenträgheitsabscheidung, durch Trägheits- und Fliehkräfte, die auf die gasgetragenen Partikel wirken, erreicht und somit eine effektive Abscheidung der mengenrelevanten größeren Partikel aus dem Entnahmestrom bewirkt wird. Die Absaugung kann hierbei zur Reduzierung der Strahldicke und Erhöhung der Effizienz auch durch Elemente mit geringer Abmessung, z. B. mittels Rohrleitungen mit gelochten oder geschlitzten Einlässen, erfolgen. Insgesamt werden hierdurch die luftgetragenen Aerosolmassen größerer Abmessungen im Heizgasstrom, und somit mögliche Ablagerungen im Wärmetauscherbereich, entscheidend reduziert und eine hohe Betriebssicherheit des regenerativen Wärmetauschers, auch im Rohgasbereich, ermöglicht.

Durch Ausführung der Heizflächen als schmutzabweisende, glatte Oberflächen, mit strahlenbeständigen Beschichtungen oder glatten Edelstahloberflächen, oder zusatzbehandelt, wie z. B. poliert, elektropoliert, und die Integration von Kondensat-Verteilungssystemen im Wärmetauscherbereich, wie z. B. Böden- oder Rinnensystemen und/oder Spraysystemen, wird dauerhaft ein effektiver Wärmeübergang wirkungsvoll unterstützt.

Vorteilhafterweise wird in dem Hochdruckabschnitt eine Strömungsgeschwindigkeit des Entlastungsstroms im Bereich von 10 m/s bis 50 m/s eingestellt. In dem Überhitzungsabschnitt wird bevorzugt eine Strömungsgeschwindigkeit des Entlastungsstroms im Bereich von 10 m/s bis 70 m/s eingestellt. Der freie Strömungsquerschnitt der Drossel wird zweckmäßigerweise derart eingestellt, dass der Druck im Hochdruckabschnitt das zwei- bis fünffache des Drucks im Überhitzungsabschnitt beträgt.

Wie oben bereits erwähnt, wird das aerosolhaltige Ventgas im Hochdruckabschnitt vorteilhafterweise um die Wärmetauscherrohre herum geleitet, die günstigerweise in einem kanalähnlichen Gebilde (Zentralkammer) zur Erzeugung hoher Gasgeschwindigkeiten, insbesondere > 10 m/s, angeordnet sind. Wärmeübertragungselemente (Rippen) auf der Rohgasseite sind bevorzugt mit einem Abstand von > 1 mm, besonders bevorzugt > 5 mm, und vorwiegend vertikal ausgerichtet, ausgeführt. Durch die Wahl einer entsprechend überdimensionierten Austauschfläche auf der Aerosolgasseite, mit zusätzlicher Heizflächenreserve von > 100 %, besonders robust und betriebssicher sind > 500 % (bezogen auf den Wert ohne Fouling), kann ein sicherer Betrieb gewährleistet werden. In der Wärmetauschereinheit kann hierbei weiterhin auch gezielt eine Teilfilterung von Aerosolen und Jod erfolgen.

Die Gasführung der aerosolhaltigen Gase durch die Wärmetauscherrohre wird ermöglicht bei einer Ausführung als Glattrohrwärmetauscher und besonders hohen Strömungsgeschwindigkeiten, von z. B. > 10 m/s bis 50 m/s, so dass relevante Ablagerungen in den Rohren vermieden werden können. Auf der gefilterten, atmosphärischen Seite werden, bei maximalen Durchsatzphasen, ebenfalls sehr hohe Gasgeschwindigkeiten von > 10 m/s bis zu 70 m/s eingestellt, so dass hohe Wärmeübergangswerte erreicht und sehr kompakte Komponenten ermöglicht werden.

Eine Hochgeschwindigkeits-Regenerativ-Wärmerückgewinnung kann bevorzugt bei einer Ausführung des Wärmetauschers gemäß Gegen- oder Kreuzgegenstromprinzip, als Rippenrohr- oder Plattenwärmetauscher verwirklicht werden. Zur Erreichung eines effektiven Wärmeüberganges in Fällen mit geringem Durchsatz sind in/an den Rohren zur Erzeugung turbulenter und/oder drallbehafteter Strömungsbedingungen bevorzugt entsprechende Einbauten oder strukturierte Rohroberflächen (Rippen etc.) vorgesehen. Hierbei gelingt es, eine Rückwärmezahl von > 0,5 bei hohem Containmentdruck und Durchsatz, die anschließend auf bis zu 0,8 bei niedrigem Containmentdruck und geringem Durchsatz gesteigert werden kann, mit sehr kompakten Einheiten zu erreichen.

Durch die Injektion oder Vorlage von Natriumhydroxid bzw. Natronlauge (NaOH) und/oder Natriumthiosulfat (Na₂S₂O₃) und/oder Calciumperoxid (CaO₂) in das Kondensat, etwa im Bereich des Kondensatsammelbeckens, kann zusätzlich eine relevante Erhöhung der Jodabscheidung bereits im Hochdruckabschnitt des Regenerativ-Wärmetauschers erfolgen. Des Weiteren kann auf diese Weise die Filterung bzw. Rückhaltung von chlorhaltigen Gasen begünstigt werden. Alternativ oder zusätzlich kann eine Eindüsung oder Einlagerung derartiger Reagenzien in den Entlastungsstrom in fester oder flüssiger Form auch im Bereich des Sand- oder Kiesbettfilters erfolgen.

Durch Zusatzbeheizung kann, auch in späten Unfallphasen, besonders effektiv im Verbund mit dem Regenerativ-Wärmetauscher, die Minimierung des Zusatzenergiebedarfes erfolgen.

Wie weiter oben bereits erläutert, durchläuft der Entlastungsstrom (das Ventgas) nach der Drosselung und vor dem Eintritt in den Überhitzungsabschnitt des Regenerativ-Wärmetauschers bei niedrigeren Temperaturen im expansionsgetrockneten Zustand einen Sand- oder Kiesbettfilter. Diese Einrichtung wird vorzugsweise im überhitzten Betrieb, insbesondere bei hohem Durchsatz, zur Vermeidung von Kondensationsaustrag, betrieben. Der Sandbettfilter wird weiterhin so ausgelegt (z. B. thermisch isoliert), dass bei hohem Durchsatz durch die vorgeschaltete Drosselung, unter Berücksichtigung der Betriebswärmeverluste, noch ein Trockenbetrieb erreicht werden kann und vorzugsweise im Teilastbetrieb eine Teilkondensation und Taupunktabsenkung/Trocknung im Gas erfolgt.

Der Sandbettfilter enthält im Anströmbereich Sand größerer Abmessung, z. B. mit einem mittleren Korndurchmesser im Bereich von 0,5 bis 2 mm (Vermeidung von Verblockung), bei einer Filterschichtstärke von vorzugsweise 0,5 bis 1 m. In Strömungsrichtung folgend wird dann feinerer Filtersand von 0,8 bis 0,3 mm Körnung vorgesehen. Der Betrieb erfolgt, wie dargelegt, vorwiegend im Trockenbetrieb. Bei entsprechender Ausführung des Sandbettfilters mit effektivem, nachgeschaltetem Kondensatseparator, z. B. als Fiberfaserseparator oder Impingementseparator, kann alternativ bei hohen Durchsätzen überwiegend ein Feuchtbetrieb erfolgen und somit noch eine weitere, relevante Erhöhung der Aerosolabscheidung am Filtermedium erreicht werden.

In besonders bevorzugter Ausgestaltung des Druckentlastungssystems ist ein Vorfilter (Trockenvorfilter), insbesondere innerhalb der Sicherheitshülle, ggf. aber auch außerhalb der Sicherheitshülle zur Aerosolgrobfilterung des Entlastungsstromes vorgesehen. Vorteilhafterweise ist parallel zu dem Vorfilter eine mit einem regelbaren Ventil verschließbare Bypassleitung geschaltet, so dass der Entlastungsstrom bedarfsweise unter teilweiser oder vollständiger Umgehung des Vorfilters aus der Sicherheitshülle zu den außerhalb befindlichen Filtersystemen geleitet werden kann.

Beim Venten der Sicherheitshülle kann der stark aktivitätshaltige Gasstrom also durch den Vorfilter geleitet werden, wo beispielsweise mittels metallischer Tiefbett-Filterkerzen oder Metallfaserfiltern eine weitgehende Filterung der Grobaerosole mit Durchmessern von > 1 mm (Rückhalterate vorzugsweise > 90 %) und eine Teilfilterung der quantitativ geringen Feinaerosolanteile mit Durchmessern < 1 mm (Rückhalterate vorzugsweise > 50 %) erfolgt. Die Vorfilterung wird vorzugsweise bei dem zwei- bis fünffachen des Drucks am Sorbensfilter (Molekularsieb), im Druckbereich von z. B. 7 bis 1 bar, betrieben.

Um die möglichen Druckverluste am Vorfilter zu begrenzen, ist bedarfsweise ein Bypassbetrieb unter Umgehung des Vorfilters vorgesehen. Die Öffnung des Bypasses erfolgt vorzugsweise automatisch und passiv (das heißt ohne Einsatz von Fremdenergie), durch Integration einer Überdruckbegrenzungseinrichtung, wie z. B. einer Berstscheibe oder einer federbelasteten Überströmventileinrichtung. Der Öffnungsmechanismus kann beispielsweise so eingestellt sein, dass die Bypassleitung freigegeben wird, wenn der Druckverlust am Vorfilter einen Wert von > 0,5 bar übersteigt. Durch die bei geschlossener Bypassleitung mittels des Vorfilters bewirkte Rückhaltung der überwiegenden Menge der Aerosole aus der anfänglichen Hochkonzentrationsphase des Unfalles kann dann in der späteren Unfallphase bei geöffneter Bypassleitung ein effektiver Betrieb der regenerativen Wärmetauschereinrichtung - auch ohne Vorfilter - ermöglicht werden.

Vorteilhafterweise werden relevanten Anlagenkomponenten derart dimensioniert und die Betriebsparameter im Entlastungsbetrieb so gewählt, dass der durch den Vorfilter und den Regenerativ-Wärmetauscher im Hochdruckabschnitt bewirkte Druckverlust insgesamt < 30 % des verfügbaren Gesamtdruckverlustes bis zur Freisetzung in die Atmosphäre beträgt, um ein hohes Temperaturniveau für die Regenerativbeheizung zu gewährleisten.

In einer vorteilhaften Ausführungsvariante ist eine Zusatzheizeinrichtung, insbesondere eine elektrische Heizeinrichtung oder eine mit Prozessdampf aus einer anderen Anlage betriebene Heizeinrichtung, zur Beheizung des Entlastungsstroms in der Entlastungsleitung vorgesehen, die zweckmäßigerweise unabhängig von den Betriebsbedingungen im Regenerativ-Wärmetauscher und im Überhitzungsabschnitt einstellbar bzw. regelbar ist. Diese Heizeinrichtung kann etwa stromabwärts der Drossel, beispielsweise im Bereich des Sand- oder Kiesbettfilters und/oder am Überhitzungsabschnitt, angeordnet sein. Alternativ oder zusätzlich können derartige Heizelemente auch stromaufwärts der Drossel im Hochdruckabschnitt der Entlastungsleitung angeordnet sein.

Eine derartige Zusatzbeheizung des Entlastungsstroms kann auch durch einen zweiten, vorher mittels des Entlastungsstromes oder durch separate Hilfsenergiequellen aufgeheizten Wärmespeicher erfolgen. Diese Einrichtungen können auch zur Überbrückung des Anfahrbetriebes genutzt werden.

Vorzugsweise wird das Sand- oder Kiesbett des Trockenfilters als Wärmespeicher im Anfahrbetrieb genutzt und durch Stand-by-Beheizung, z. B. mittels Heißluft oder Oberflächenbeheizung, auf > 80 °C, vorzugsweise > 100 °C vorgewärmt.

In einer weiteren zweckdienlichen Variante ist zwischen dem Sand- oder Kiesbettfilter und dem Überhitzungsabschnitt ein Gastrockner bzw. ein Trocknungskühler in die Entlastungsleitung geschaltet, der eine zusätzliche Trocknung und Taupunktabsenkung des Entlastungsstroms vor seinem Eintritt in den Überhitzungsabschnitt bewirkt. Die Kühlleistung eines solchen Trocknungskühlers beträgt zweckmäßigerweise < 25 % der Kühlleistung des Regenerativ-Wärmetauschers, vorzugsweise < 10 %.

Hierdurch wird in Betriebsfällen mit bereits geringem Containmentdruck und niedrigen Temperaturen, sprich mit nur geringem Überhitzungspotential, wie etwa auch beim Anfahren, in der zwischengeschalteten Kühleinrichtung der Taupunkt durch Wärmeabgabe an die Umgebung oder auch an aufzuheizende Massen mit entsprechender Wärmekapazität abgesenkt. In dem nachfolgenden Überhitzungsabschnitt kann nun durch Aufheizung des Entlastungsstroms auf nahezu Hochdruck-Prozesstemperatur ein deutlicher Taupunktabstand sichergestellt werden.

In vorteilhafter Ausgestaltung ist ein Sauggebläse mit Elektro- oder Verbrennungsmotorantrieb in die Entlastungsleitung geschaltet bzw. bedarfsweise zuschaltbar, so dass insbesondere im Langzeitbetrieb des Druckentlastungssystems, d. h., wenn der anfänglich nach einem Störfall vorhandene hohe Containment-Innendruck bereits weitgehend abgebaut ist, der Entlastungsstrom "aktiv" durch das Saugebläse aus der Sicherheitshülle in die Entlastungsleitung mit den darin befindlichen Filtereinrichtungen angesaugt wird. Mit anderen Worten kann durch die Zuschaltung eines Sauggebläses das Filtersystem im Langzeit-Nachstörfallbetrieb auch aktiv betrieben oder auch gezielt zur Unterdruckhaltung des Containments genutzt werden, um somit ungefilterte Containment-Außenleckagen vollständig zu vermeiden.

In Abschaltphasen erfolgt die Kühlung der Trockenfiltereinheit (d. h. des Sand- oder Kiesbettfilters) vorteilhafterweise durch Verdampfen des im Regenerativ-Wärmetauscher gebildeten und im Kondensatsammelraum gesammelten Kondensates mittels der akkumulierten Aktivitäten und durch anschließendes Durchleiten des Dampfes durch die Trockenfiltereinheit. Der Kondensatsammelraum ist hierzu zweckmäßigerweise derart dimensioniert, dass Trockenfilter-Nachzerfallswärmeleistungen von > 10 kW noch über einen Zeitraum von > 8 h durch Dampfkühlung beherrscht werden können. Zur weiteren Intensivierung der Kühlung kann auch ein temporär zuschaltbares Gebläse in die zum Trockenfilter führenden Leitungen integriert werden.

Durch die oben genannten Maßnahmen, insbesondere durch die Gastrocknung und die dadurch bewirkte Erhöhung des Taupunktabstandes, kann nunmehr eine relevante Belegung der großen inneren Reaktionsoberfläche des Sorbensfilters mit wasserhaltigem Dampf, sowohl im Makro- als auch im Mikroporenbereich des Sorptionsmittels, sicher vermieden werden und somit die Jodrückhaltung durch Adsorption an den Oberflächen und ggf. Chemiesorption am Sorbensmaterial besonders effektiv erfolgen.

Die Sorbensmaterialien bzw. Sorbensien sind vorzugsweise mit > 50 m²/g innerer Oberfläche und aus anorganischen Materialen ausgeführt. Durch das nun permanent wirkende Überhitzungsverfahren wird somit selbst der Einsatz von Sorbensmaterialien mit feuchteempfindlicher (wasserlöslicher) Silbernitrat-Belegung oder Dotierung möglich.

Beispielsweise ermöglicht eine Verwendung von silberimprägnierten keramischen Produkten, z. B. Silicagel, dauerhaft eine sehr effiziente Jodabscheidung von > 99,9 % zu erzielen. Das Molekularsieb kann beispielsweise auch auf Zeolith-Basis oder mit einem anderen, vorzugsweise anorganischen Trägerkörper hergestellt und mit Silbernitrat (AgN0₃) belegt oder dotiert sein, welches bei Jodanfall zu Silberjodid umgesetzt wird. Dies ist allerdings nur dann günstig, wenn eine ausreichende Überhitzung des Entlastungsstroms in allen Betriebsphasen gewährleistet werden kann. Vorteilhafterweise kann hierbei auch die Organojod-Rückhaltung in verunreinigten Gasen, z. B. stickoxidhaltigen Gasen und dergleichen, hocheffektiv erfolgen.

Als robusteres Filtermaterial kann ein künstlicher Zeolith, in den beispielsweise durch Ionenaustausch Silber- und/oder Schwermetallkationen in das dreidimensionale Kristallgitter eingebracht wurden, verwendet werden. Es sind auch Kombinationen von bindemittelfreien Zeolithen, vorzugsweise mit offener Struktur, möglich. Solch ein binderfreies Molekularsieb, z. B. vom Strukturtyp Faujasitstruktur, ist noch betriebssicherer, auch in stark überhitzter Dampfatmosphäre von z. B. > 200 °C, und auch bei kurzzeitigen Wasserdampfsorptionsbedingungen (Feuchtbetrieb). Ein kurzzeitiger Feuchtbetrieb führt also nicht zur Zerstörung dieser beispielsweise mit Silber dotierten Zeolithe. Ebenso kann ein geringer Laugeneintrag toleriert werden. Weiterhin wird durch Feuchteadsorption eine kurzzeitige Gasüberhitzung erreicht.

Besonders bevorzugt ist es, wenn der Sorbensfilter ein Sorbensmaterial auf Zeolith-Basis als Mischung von Zeolithen mit nicht-wasserlöslicher Dotierung, insbesondere einer Silberdotierung, und anorganischen Sorbensmaterialien mit wasserlöslicher Dotierung, etwa einer Silbernitrat-Dotierung, umfasst. Hierbei erfolgt vorteilhafterweise auch in kurzen Feuchtphasen die Wasserdampfadsorption ausschließlich oder jedenfalls primär am Zeolith, so dass ein Herauslösen der wasserlöslichen Substanzen, wie etwa Silbernitrat, nun sicher vermieden werden kann. Diese Kombination von beispielsweise sowohl einer Silberdotierung als auch einer Silbernitrat-Dotierung auf einem gemeinsamen Trägerkörper erweist sich durch den dualen Abscheidemechanismus als hoch effizient und betriebssicher.

Ferner können als geeignete Sorbensmaterialien für eine besonders effektive und ökonomische Jodrückhaltung auch phosphazene Moleküle, phosphazene Zeolithe, insbesondere cyclo-triphosphazene Zeolithe, Kanaltyp-Kristalle, ggf. mit zusätzlicher Dotierung, Verwendung finden.

In bevorzugter Ausgestaltung kann die Filterkammer neben dem Jodsorbensfilter auch noch weitere Filtereinrichtungen und Rückhalteeinrichtungen enthalten, etwa zur Rückhaltung von chlorhaltigen und /oder nitrosen Gasen und/oder von ölhaltigen Verbindungen. Hierzu können beispielsweise weitere Sandbettfilter vorgesehen sein sowie ggf. die Eindüsung oder Vorlage geeigneter Chemikalien.

Zusätzlich kann hierbei in bestimmten Betriebsphasen durch gezielte partielle Adsorption von Wasserdampf an den vorgenannten Zeolithen (Erhöhung der Feuchte um z. B. < 2 Gewichtsprozent durch Sorption) eine weitere kurzzeitige Gasüberhitzung erreicht und somit die gewünschte kontinuierliche Organojod-Rückhaltung gewährleistet werden. Dies ist insbesondere im Anfahrbetrieb von Interesse (so genannte Anfahr-Adsorption). Zur Begrenzung der Temperaturen bei Feuchteanfall kann weiterhin auch eine gezielte Begrenzung der katalytischen Aktivität dieser Sorbensien, beispielsweise durch Diffusionsschichten oder Mischdotierung (etwa mit Silber- und/oder Schwermetallkationen) und ggf. mit nichtkatalytischen Zusätzen, vorgenommen werden.

Wie bereits weiter oben angedeutet, wird im Anfahrbetrieb des Druckentlastungssystems - bei noch vergleichsweise geringen Betriebstemperaturen - vorteilhafterweise im Sorbensfilter eine zumindest partielle Dampfadsorption zugelassen und die Adsorptionswärme zur Überhitzung des Entlastungsstromes und des Sorbensfilters genutzt. Dies ist allerdings nur dann sinnvoll, wenn der Sorbensfilter hinreichend feuchteunempfindlich ist, also z. B. auf Zeolith-Basis mit nichtlöslicher Dotierung aufgebaut ist.

Des Weiteren wird vorteilhafterweise im Anfahrbetrieb der Entlastungsstrom stromabwärts der Drossel durch Kondensation und Absenkung des Taupunktes im Sand- oder Kiesbettbettfilter getrocknet.

In Bezug auf die Vorrichtung wird die eingangs genannte Aufgabe gelöst durch ein Druckentlastungssystem mit den Merkmalen des Anspruchs 10.

Es ist demnach erfindungsgemäß vorgesehen, dass
- stromabwärts der Drossel ein Sand- oder Kiesbettfilter in die Entlastungsleitung geschaltet ist,
- die Entlastungsleitung weiter stromabwärts einen Überhitzungsabschnitt ausweist, der über Wärmetauscherflächen in thermischer Wechselwirkung mit dem Hochdruckabschnitt steht,
- die Entlastungsleitung unmittelbar stromabwärts des Überhitzungsabschnitts in den Einlass der Filterkammer mündet, und
- der Auslass der Filterkammer mit einer in die Atmosphäre führenden Ausblasöffnung verbunden ist.

Weitere vorteilhafte Ausgestaltungen der Vorrichtung wurden bereits weiter oben beschrieben oder gehen sinngemäß aus der Beschreibung der entsprechenden Verfahrensschritte hervor.

Die durch die Erfindung erzielten Vorteile bestehen insbesondere darin, dass durch eine gezielte Überhitzung des Entlastungsstroms vor dessen Eintritt in den Jodsorbensfilter im Sorbens sowohl im Makro- als auch im Mikroporenbereich eine relevante Belegung der Reaktionsflächen mit Wasserdampf und eine Blockierung durch Kapillarkondensation sicher verhindert werden. Durch die passiv-regenerative Ausgestaltung des Überhitzungsvorganges mit Wärmerückgewinnung aus dem Hochdruckbereich ist das Verfahren auch bei vollständigem Energieausfall ("station blackout") im zu entlastenden Kernkraftwerk einsetzbar. Weiterhin erfolgt durch die entscheidend hohe Gasüberhitzung von > 10 °C, vorzugsweise > 20 °C, z. B. im Temperaturniveau von > 120 °C bis 170 °C und mehr (bei hohen Durchsatzraten und hoher Gasüberhitzung in der Anfangsphase des Entlastungsvorganges), eine signifikante Erhöhung der Reaktionsgeschwindigkeiten im Jodsorptionsfilter. Durch die nun praktisch uneingeschränkt zur Verfügung stehenden, sehr hohen inneren Reaktionsoberflächen und durch die verbesserte Diffusion gelingt es, eine passive, hocheffektive Jodsorptionsfilterung, auch für Organojod-Verbindungen, mit Rückhalteraten von > 97 %, vorzugsweise > 99 %, zu erreichen. Eine Resuspension (Rückfreisetzung) des Jodes aus dem Jodsorbensfilter kann durch die chemische Bindung des Jodes und durch die permanente Beheizung des Jodsorbensfilters weitgehend vermieden werden.

In Verbindung mit weiteren Filtereinrichtungen, insbesondere einem metallischen Vorfilter und einem Trockenfilter auf Sand- oder Kiesbettbasis, wird es damit erstmals ermöglicht, die bei Havariezuständen im Containment entstehenden aktiven Gase oder Dämpfe - zur ultimativen Druckbegrenzung im Containment - mit einer Organojod-Retention von > 99 % bis hin zu 99,9 % gefiltert an die Umgebung abzugeben. Dabei werden auch sonstige luftgetragene Aktivitäten und Aerosole sicher im Filtersystem zurückgehalten, selbst bei einem Ventbetrieb über mehrere Tage hinweg.

Ein Ausführungsbeispiel der Erfindung wird nachfolgend anhand von Zeichnungen näher erläutert. Darin zeigen in jeweils stark vereinfachter und schematisierter Darstellung:
- FIG. 1: ein Prinzipschaltbild von wesentlichen Komponenten eines erfindungsgemäßen Druckentlastungssystems für ein Kernkraftwerk,
- FIG. 2: eine kombinierte Regenerativ-Wärmetauscher- und Sorbensfiltereinheit des Druckentlastungssystems gemäß FIG. 1 in einem Längsschnitt,
- FIG. 3: eine perspektivische Ansicht von mehreren nebeneinander aufgestellten Regenerativ-Wärmetauscher- und Sorbensfiltereinheiten gemäß FIG. 2,
- FIG. 4: eine Variante des Druckentlastungssystems gemäß FIG. 1, und
- FIG. 5: das Detail D aus FIG. 4

Gleiche oder gleichwirkende Teile sind in allen Figuren mit denselben Bezugszeichen versehen.

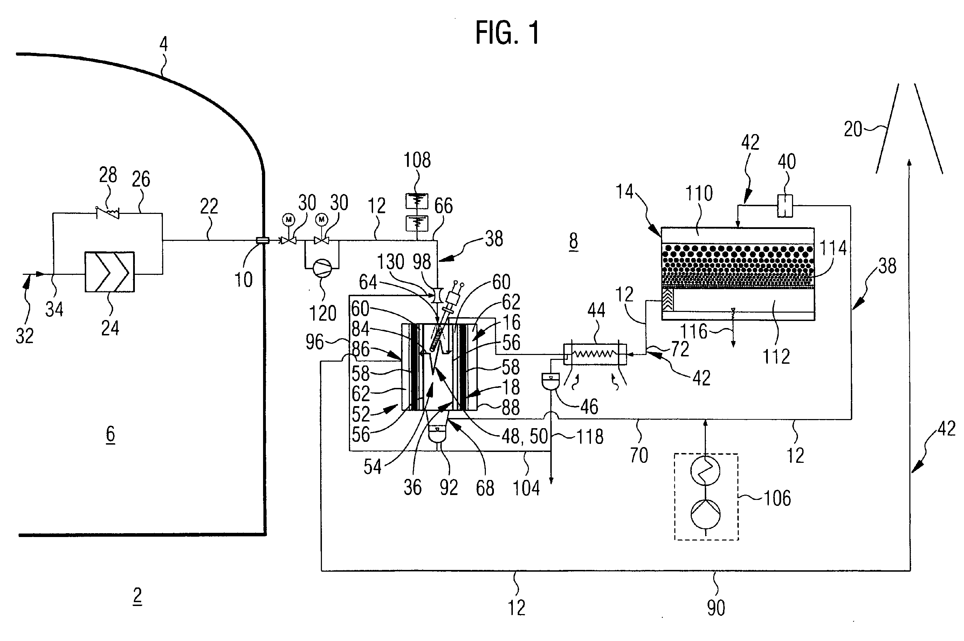

Das in FIG. 1 ausschnittsweise dargestellte Kernkraftwerk 2 weist eine auch als Containment bezeichnete äußere Sicherheitshülle 4 mit einem massiven Stahlbetonmantel auf. Die Sicherheitshülle 4 umschließt einen Innenraum 6. Im Innenraum 6 sind die wesentlichen nuklearen Komponenten des Kernkraftwerks 2 wie etwa der Reaktordruckbehälter mit dem Reaktorkern sowie weitere nukleare und nichtnukleare Anlagenkomponenten angeordnet (nicht dargestellt). Der Stahlbetonmantel der Sicherheitshülle 4 ist an seiner Innenseite mit einem Stahlmantel ausgekleidet. Die Sicherheitshülle 4 bildet einen hermetischen Verschluss des Innenraumes 6 gegenüber der Außenwelt und bewirkt bei einem unwahrscheinlichen Störfall mit Freisetzung von radioaktiv belasteten Gasen oder Dämpfen in den Innenraum 6 deren Rückhaltung und Einschluss.

Die Sicherheitshülle 4 ist dazu ausgelegt, auch vergleichsweise hohen Innendrücken von z. B. 3 bis 8 bar im Innenraum 6, wie sie etwa bei Havariezuständen mit massiver Dampffreisetzung auftreten könnten, standzuhalten und zugleich über einen längeren Zeitraum hinweg dicht zu bleiben. Gleichwohl ist zur weiteren Erhöhung der Reaktorsicherheit, und auch um den Innenraum 6 nach einem Störfall wieder begehbar zu machen, ein Druckentlastungssystem 8 vorgesehen, mit dessen Hilfe die im Innenraum 6 enthaltenen Gase und Dämpfe gefiltert, gereinigt und weitestgehend aktivitätsfrei in die Umgebung ausgeblasen werden können, so dass ein kontrollierter Druckabbau im Innenraum 6 ermöglicht ist. Der entsprechende Vorgang wird auch als Venting bezeichnet.

Das Druckentlastungssystem 8 ist vorliegend für eine besonders effektive und energetisch günstige Rückhaltung von im Ventgas enthaltenen Aktivitätsträgern, insbesondere von elementarem Jod und jodhaltigen organischen Verbindungen niedriger Kohlenstoffzahl (so genanntes Organojod), ausgelegt. Zu diesem Zweck umfasst das Druckentlastungssystem 8 eine an einen Auslass 10 bzw. an eine Durchführung der Sicherheitshülle 4 angeschlossene Entlastungsleitung 12, in die hintereinander unter anderem ein Sand- oder Kiesbettfilter 14 und weiter stromabwärts ein in einer Filterkammer 16 angeordneter Sorbensfilter 18, nämlich ein Jodsorbensfilter, geschaltet sind. Weiter stromabwärts wird der gefilterte Entlastungsstrom über einen Kamin 20 oder Schornstein, allgemein eine Ausblasöffnung, in die umliegende Atmosphäre ausgeblasen. Die Strömungsrichtung des Entlastungsstroms ist jeweils durch Pfeile angedeutet.

Wie in FIG. 1 ersichtlich ist, kann die Entlastungsleitung 12 auch einen innerhalb der Sicherheitshülle 4 liegenden inneren Leitungsabschnitt 22 umfassen, in die ein Vorfilter 24, insbesondere ein Metallvorfilter, zur Zurückhaltung der Grobaerosole geschaltet ist. Für eine bedarfsweise Umgehung des Vorfilters 24 ist eine parallel zu ihm geschaltete Bypassleitung 26 vorgesehen, die sich mit einem Regelventil 28 bedarfsgerecht öffnen oder schließen lässt.

Ein oder mehrere in die Entlastungsleitung 12 geschaltete, im Normalbetrieb des Kernkraftwerks 2 verschlossene Absperrventile 30 können wie in FIG. 1 ersichtlich außerhalb der Sicherheitshülle 4, alternativ oder zusätzlich auch innerhalb der Sicherheitshülle 4 angeordnet sein, beispielsweise direkt am Einlass 32 des Leitungsabschnitts 22, also stromaufwärts des Vorfilters 24 und der Abzweigungsstelle 34 der Bypassleitung 26. Um bei einem Störfall mit Druckerhöhung im Innenraum 6 den Druckentlastungsvorgang einzuleiten, wird das jeweilige Absperrventil 30 geöffnet, was vorzugsweise automatisch und ohne Einsatz von Fremdenergie, etwa durch eine druckabhängige Auslösevorrichtung erfolgt.

Zur Einstellung von im Hinblick auf das Filterungsziel möglichst optimalen Betriebsbedingungen am Sorbensfilter 18 ist eine Reihe von technischen Maßnahmen vorgesehen: Zum einen wird die Filterkammer 16 mit dem Sorbensfilter 18 im Entlastungsbetrieb über zugehörige Wärmetauscherflächen 36 durch den noch ungefähr (jedenfalls von der Größenordnung her) auf dem Druckniveau im Innenraum 6 befindlichen, vergleichsweisen heißen Entlastungsstrom selber vorgewärmt. Erst nach dieser Wärmeabgabe und -übertragung im Hochdruckabschnitt 38 der Entlastungsleitung 12 wird der Entlastungsstrom in einem weiter stromabwärts liegenden Drosselventil, kurz Drossel 40, auf annähernd (jedenfalls von der Größenordnung her) Umgebungsdruck entspannt und dabei getrocknet. Der Teil der Entlastungsleitung 12 stromaufwärts der Drossel 40 bildet den Hochdruckabschnitt 38, der Teil stromabwärts den Niederdruckabschnitt 42.

Im Anschluss an die Expansionstrocknung durch die Drossel 40 wird der Entlastungsstrom durch den Sand- oder Kiesbettfilter 14 geleitet. Stromabwärts des Sand- oder Kiesbettfilters 14 können, wie in FIG. 1 angedeutet, zusätzliche Gastrockner 44 mit zugehörigen Kondensatabscheidern und Kondensatsammel-behältern 46 in die Entlastungsleitung 12 geschaltet sein. Weiter stromabwärts wird der Entlastungstrom im Niederdruckabschnitt 42 der Entlastungsleitung 12 derart an dem Hochdruckabschnitt 38 vorbeigeführt, dass an entsprechenden Wärmetauscherflächen 48 eines Überhitzungsabschnitts 50 eine Wärmeübertragung vom Gasstrom im Hochdruckabschnitt 38 zum Gasstrom im Niederdruckabschnitt 42 erfolgt. Erst nach der dadurch bewirkten Überhitzung wird der entspannte Entlastungsstrom durch die Filterkammer 16 mit dem Sorbensfilter 18 geleitet.

Die im noch nicht entspannten Entlastungstrom im Hochdruckabschnitt 38 enthaltene Wärmeenergie wird also in zweifacher Weise genutzt: Zum einen erfolgt über die Wärmetauscherflächen 36 eine Beheizung der Filterkammer 16 mit dem darin angeordneten Sorbensfilter 18. Zum anderen erfolgt über die Wärmetauscherflächen 48 eine Überhitzung des entspannten Entlastungsstroms unmittelbar vor dem Eintritt in die Filterkammer 16. Dabei ist durch geeignete Dimensionierung und Auslegung der strömungsführenden und wärmeleitenden Komponenten und ggf. durch geeignete Einstellung des Drosselquerschnitts der Drossel 40 sowie weiterer Betriebsparameter sichergestellt, dass der Entlastungstrom im Überhitzungsabschnitt 50, also unmittelbar vor dem Eintritt in die Filterkammer 16, auf eine Temperatur erhitzt wird, die mindestens 10 °C über der dort vorliegenden Taupunkttemperatur liegt, im Volllastbetrieb des Druckentlastungssystems 8 sogar mindestens 20 °C. Durch die Kombination dieser beiden Maßnahmen wird eine Kondensation des Entlastungsstroms in der Filterkammer 16, die zu einer Effizienzbeeinträchtigung oder gar dauerhaften Zerstörung des Sorbensfilters 18 führen könnte, sicher vermieden.

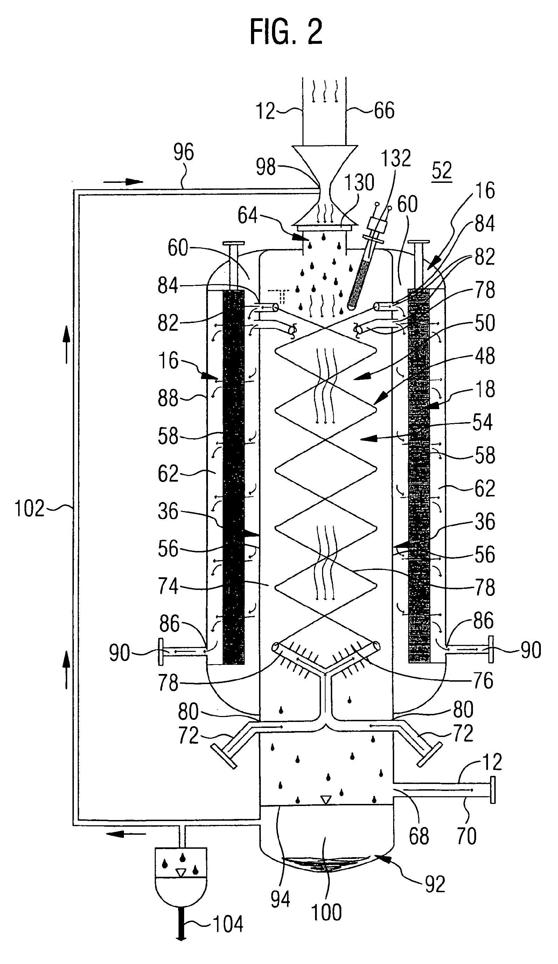

FIG. 2 zeigt etwas detaillierter eine konkrete Ausgestaltung der die Wärmetauscherflächen 36 und 48 enthaltenden Wärmetauscher-Sorbensfilter-Einheit 52. Die Filterkammer 16 ist als Ringkammer ausgeführt, die eine beispielsweise zylindrische oder quaderförmige Zentralkammer 54 ringförmig und insbesondere koaxial umgibt. Die Längsachse der Wärmetauscher-Sorbensfilter-Einheit 52 ist vertikal ausgerichtet. Filterkammer 16 und Zentralkammer 54 sind durch eine gut wärmeleitende Trennwand 56 gasdicht voneinander getrennt. Die Filterkammer 16 ist ihrerseits durch ringförmig in ihr angeordnete Filterelemente 58 in einen innen liegenden, nach innen durch die Trennwand 56 begrenzten Zuströmraum 60 und einen außen liegenden Abströmraum 62 unterteilt. Alternativ zu der Ringkammer-Bauweise kann auch eine schlichte Kastenbauweise vorgesehen sein, wobei sich beispielsweise an eine quaderförmige Zentralkammer 54 zu einer Seite hin eine durch eine gerade Trennwand 56 getrennte quaderförmige Filterkammer 16 anschließt. Natürlich können einer Zentralkammer 54 auch mehrere voneinander getrennte Filterkammern 16 zugeordnet sein, die in Bezug auf den entspannten Entlastungsstrom im Niederdruckabschnitt 42 dann strömungsmäßig parallel geschaltet sind.

Die Zentralkammer 54 weist im Deckenbereich einen Zentralkammereinlass 64 auf, an den der von der Sicherheitshülle 4 kommende Leitungsabschnitt 66 der Entlastungsleitung 12 angeschlossen ist (siehe auch FIG. 1). Im Bodenbereich weist die Zentralkammer 54 einen Zentralkammerauslass 68 auf, an den der zur Drossel 40 und nachfolgend zu dem Sand- oder Kiesbettfilter 14 führende Leitungsabschnitt 70 der Entlastungsleitung 12 angeschlossen ist. Der in Strömungsrichtung des Entlastungsstroms gesehen von dem Sand- oder Kiesbettfilter 14 wegführende Leitungsabschnitt 72 der Entlastungsleitung 12 ist mit einen im Innenraum 74 der Zentralkammer 54 angeordneten System von strömungsmäßig parallel geschalteten, an Ihrer Außenseite mit Rippen 76 versehenen Wärmetauscherrohren 78 verbunden (in den Endbereichen sind die Wärmetauscherrohre 78 halbperspektivisch gezeichnet, dazwischen nur als einfache Linien dargestellt; ein zweites Paar von Wärmetauscherrohren 78 ist nur im Bereich der Durchtritts-öffnungen 82 dargestellt).

Dazu ist die Entlastungsleitung 12 im Leitungsabschnitt 72 durch in Bodennähe angebrachte, an ihrer Außenseite gasdicht verschlossene Gehäusedurchbrechungen 80 in die Zentralkammer 54 hineingeführt und ggf. über Verzweigungstücke mit den Wärmetauscherrohren 78 verbunden. Alternativ können auch Plattenwärmetauscher oder andere Wärmetauscherelemente vorgesehen sein. Die Wärmetauscherrohre 78 sind im Innenraum 74 der Zentralkammer 54 in mäanderförmiger Weise von unten nach oben bis in den Deckenbereich geführt und dort mit in den Zuströmraum 60 der Filterkammer 16 führenden, die Trennwand 56 durchdringenden Durchtrittsöffnungen 82 verbunden, die zusammen den Filterkammereinlass 84 bilden. Der Filterkammerauslass 86 wiederum ist an der Außenseite des Filterkammergehäuses 88, z. B. in dessen Bodenbereich oder auch an anderer Stelle, angeordnet. Über einen an den Filterkammerauslass 86 angeschlossenen Leitungsabschnitt 90 der Entlastungsleitung 12 ist der Abströmraum 62 der Filterkammer 16 mit dem Kamin 20 verbunden.

Auf diese Weise wird der im Leitungsabschnitt 66 von der Sicherheitshülle 4 des Kernkraftwerks 2 kommende, unter hohem Druck stehende und vergleichsweise heiße Entlastungstrom über den Zentralkammereinlass 64 in die Zentralkammer 54 hineingeführt und durchströmt diese im Wesentlichen vertikal von oben nach unten. Anschließend wird das Ventgas durch den Zentralkammerauslass 68 und den Leitungsabschnitt 70 zu der Drossel 40 geführt, durch Expansion getrocknet und danach durch den Sand- oder Kiesbettfilter 14 geleitet. Über den Leitungsabschnitt 72 tritt der entspannte Gasstrom in die Wärmetauscherrohre 78 ein, und wird im Gegenstrom oder Kreuzgegenstrom zum Hochdruck-Entlastungstrom im Wesentlichen von unten nach oben geführt. Beim Durchströmen der Zentralkammer 54 tritt das Ventgas im Hochdruckabschnitt 38 in thermischen Kontakt zum einen mit der gut wärmeleitenden Trennwand 56, die somit als Wärmetauscherfläche 36 zur Wärmeübertragung auf die Filterkammer 16 wirksam ist, und zum anderen mit den gut wärmeleitenden Wärmetauscherrohren 78, die damit als Wärmtauscherflächen 48 zur Wärmeübertragung auf den in den Wärmetauscherrohren 78 geführten, durch die Drossel 40 entspannten Entlastungsstrom wirksam sind. Die Wärmetauscherrohre 78 bilden damit zugleich den Überhitzungsabschnitt 50, in dem die oben bereits beschriebene Überhitzung des entspannten Entlastungsstroms erfolgt, bevor dieser im überhitzten Zustand über den Filterkammereinlass 84 in den Zuströmraum 60 der Filterkammer 16 eintritt, anschließend die Filterelemente 58 durchströmt und schließlich über den Abströmraum 62, den Filterkammerauslass 86 und den Leitungsabschnitt 90 gefiltert zu dem Kamin 20 gelangt.

Für eine Verbesserung des Wärmeübergangs können die Wärmetauscherrohre 78 auch in ihrem Inneren geeignet strukturiert sein, z. B. mit Rippen versehen sein oder andere Turbulenz oder eine Drallströmung erzeugende Inneneinbauten aufweisen.

Für eine betriebliche Reinigung der Wärmetauscherflächen 36 und 48 ist im Hochdruckabschnitt 38 weiterhin eine (teilweise) Rückführung und Einsprühung von sich in der Zentralkammer 54 bildendem Kondensat vorgesehen. Dazu ist der Bodenbereich der Zentralkammer 54 als Kondensatsammelbecken 92, auch als Sumpf bezeichnet, ausgebildet. Das Kondensatsammelbecken 92 ist derart dimensioniert, dass der sich im Entlastungsbetrieb einstellende Kondensatspiegel 94 unterhalb des Zentralkammerauslasses 68 liegt. Unterhalb des Kondensatspiegels 94 ist eine Kondensatrückführleitung 96 angeschlossen, deren anderes Ende im Bereich des Zentralkammereinlasses 64 in eine Verjüngungsstelle 98 des Leitungsabschnittes 66 einmündet. Dadurch wird das sich im Kondensatsammelbecken 92 sammelnde Kondensat 100 - unterstützt durch die Saugwirkung der Verjüngungsstelle 98 - über den Steigabschnitt 102 der Kondensatrückführleitung 96 im Naturumlauf zumindest teilweise zu dem Zentralkammereinlass 64 zurückgeführt und durch geeignete Mittel, wie z. B. eine Düse 130, als Tröpfchenregen oder Sprühnebel in den in die Zentralkammer 54 einströmenden Entlastungstrom eingedüst. Überschüssiges Kondensat 100 kann bedarfsweise durch eine von der Kondensatrückführleitung 96 abzweigende Kondensatableitung 102 entnommen und beispielsweise zu einem Kondensatlagerbehälter (nicht dargestellt) geführt werden.

Der Sand- oder Kiesbettfilter 14 besitzt einen stromabwärts der Drossel 40 an den Leitungsabschnitt 70 angeschlossenen Zuströmbereich 110, einen mit dem Leitungsabschnitt 72 verbundenen Abströmbereich 112 und ein dazwischen liegendes, als Filtermedium wirksames Sand- oder Kiesbett 114. Das Sand- oder Kiesbett 114 weist mehrere Schichten auf, wobei der mittlere Korndurchmesser des Filtersandes vom Zuströmbereich 110 zum Abströmbereich 112 hin abnimmt, beispielsweise von 2 mm zu 0,5 mm. Der Sand- oder Kiesbettfilter 114 ist vorzugsweise für einen Trockenbetrieb ohne Kondensatanfall im Sand- oder Kiesbett 114 ausgelegt und wird durch entsprechende Einstellung von Temperatur und Feuchte im Entlastungstrom in einer solchen Weise betrieben. Für den alternativen Fall eines Feuchtbetriebes, beispielsweise im Anfahrbetrieb, ist dem Sand- oder Kiesbett 114 in Strömungsrichtung gesehen zweckmäßigerweise ein hier nur schematisch angedeuteter Kondensatseparator 116 nachgeschaltet.

Die Filterelemente 58 des Sorbensfilters 18 sind bevorzugt aus Jod und Organojod sorbierenden Materialien gefertigt, z. B. aus bindemittelfreien Zeolithen mit offener Struktur, das heißt einem offenen Porensystem, und mit im Feuchtbetrieb nicht löslicher Silberdotierung. Falls ein Feuchteanfall im Sorbensfilter 18 in allen Betriebszuständen des Druckentlastungssystems 8 sicher ausgeschlossen werden kann, etwa durch entsprechende Auslegung der Überhitzungsleistung im Überhitzungsabschnitt 50, können alternativ auch Zeolithe mit einer Silbernitrat-Dotierung bzw. -belegung als Filtermaterialien vorgesehen oder jedenfalls beigemischt sein, deren Rückhaltewirkung für Organojod sich bei hinreichend hohem Taupunktabstand des Entlastungsstroms überraschenderweise als besonders hoch herausgestellt hat.

Für eine sichere Beherrschung von besonderen Betriebszuständen, etwa beim Anfahrbetrieb, ist optional eine mit einer externen Energiequelle betriebene Zusatzheizeinrichtung 106 thermisch an die Entlastungsleitung 12 angekoppelt, hier in FIG. 1 beispielsweise im Bereich des Leitungsabschnitts 70 zwischen dem Zentralkammerauslass 64 der Wärmetauscher-Sorbensfilter-Einheit 52 und der Drossel 40. Des Weiteren kann jeweils eine elektrische Zusatzheizung 132 wie in FIG. 2 dargestellt in der Zentralkammer 54 und/oder in der Filterkammer 16, insbesondere in deren Zuströmraum, 60 untergebracht sein.

Im Leitungsabschnitt 72 zwischen dem Sand- oder Kiesbettfilter 14 und dem Überhitzungsabschnitt 50 können, wie bereits weiter oben erwähnt, zusätzliche Gastrockner 44 vorgesehen sein. Im Gastrockner 44 anfallendes Kondensat wird durch eine Kondensatableitung 118, die wie in FIG. 1 ggf. in die von der Wärmetauscher-Sorbensfilter-Einheit 52 kommende Kondensatableitung 104 mündet, abgeleitet.

Weiterhin können im Leitungsabschnitt 66 zwischen dem Auslass 10 der Sicherheitshülle 4 und dem Zentralkammereinlass 64 der Wärmetauscher-Sorbensfilter-Einheit 52 Vorrichtungen zur Vakuumbegrenzung 108 vorgesehen sein. Hierdurch wird eine Vakuumbildung in der Sicherheitshülle 4, z. B. nach erfolgtem Venting und anschließender partieller Kondensation des vorhandenen Dampfes (z. B. durch Zuschaltung eines Spray- oder sonstigen Kühlsystems) durch bedarfsgerechte Lufteinsaugung in die Sicherheitshülle 4 vermieden bzw. quantitativ begrenzt.

Für eine aktive Absaugung des in der Sicherheitshülle 4 befindlichen Gas-DampfGemisches kann optional ein Sauggebläse 120 in die Entlastungsleitung 12 geschaltet bzw. bedarfsweise zuschaltbar sein, welches durch eine externe Energiequelle mit Antriebsenergie versorgt wird. Damit ist es möglich, den Innenraum 6 der Sicherheitshülle gegenüber der Umgebungsatmosphäre auf (geringen) Unterdruck zu bringen und zu halten.

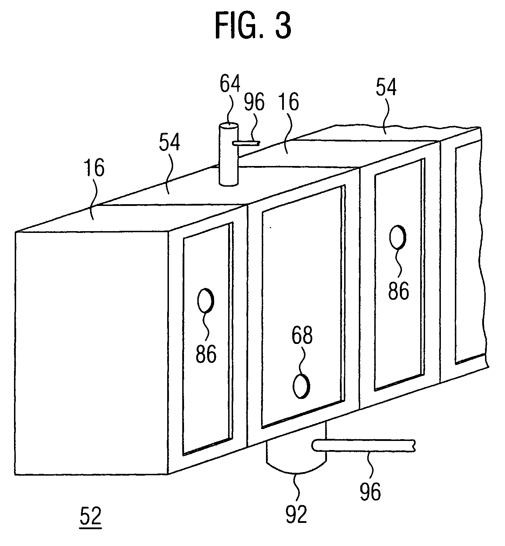

Schließlich ist zu erwähnen, dass das Druckentlastungssystem 8 mehrere strömungsmäßig parallel geschaltete Stränge gleicher oder ähnlicher Bauart aufweisen kann. Es ist auch möglich, dass nur einzelne Abschnitte der Entlastungsleitung 12 durch Parallelschaltung gleichartiger Komponenten dupliziert sind. Dabei kann es sinnvoll sein, mehrere der in FIG. 2 dargestellten Wärmetauscher-Sorbensfilter-Einheiten 52 in der Art eines modularen Systems direkt aneinander angrenzend und thermisch miteinander gekoppelt aufzustellen, und zwar vorzugsweise mit alternierender Anordnung von beispielsweise kastenförmigen Zentralkammern 54 und entsprechenden Filterkammern 16. Dies ist in FIG. 3 veranschaulicht.

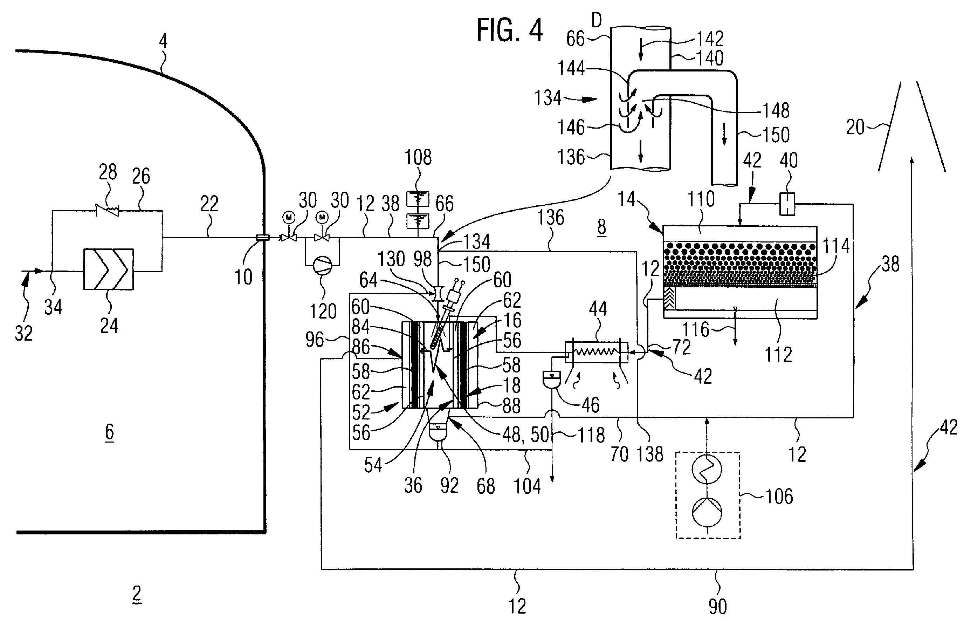

Das Druckentlastungssystem 8 gemäß FIG. 4 unterscheidet sich von demjenigen in FIG. 1 insofern, als ein Teilstrom des Entlastungsstroms im Hochdruckabschnitt 38 an der Wärmetauscher-Sorbensfilter-Einheit 52 vorbeigeführt wird, also nicht die Zentralkammer 54 durchströmt und somit nicht zur Überhitzung des Niederdruck-Entlastungsstroms im Niederdruckabschnitt 42 beiträgt. Dazu ist an der Verzweigungsstelle 134 stromaufwärts des Zentralkammereinlasses 64, hier stromaufwärts der Düse 130 für die Kondensateinsprühung, eine Bypassleitung 136 an die Entlastungsleitung 12 angeschlossen, die an der Einmündungsstelle 138 stromabwärts des Zentralkammerauslasses 68 und stromaufwärts der Drossel 40 wieder in die Entlastungsleitung 12 einmündet. Zur Einstellung des Teilstrom-Verhältnisses können geeignete Stell- und Regeleinrichtungen (nicht dargestellt) vorgesehen sein.

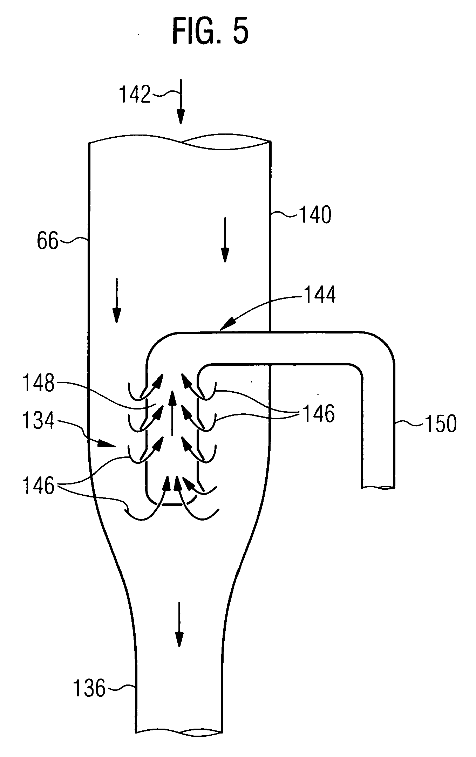

In besonders vorteilhafter Ausgestaltung ist die Verzweigungsstelle wie in dem vergrößert heraus gegriffenen, in FIG. 5 noch einmal gesondert dargestellten Detail D beschaffen: Der im Leitungsabschnitt 66 von der Sicherheitshülle 4 kommende Hochdruck-Entlastungsstrom durchströmt eine Rohrleitung 140 in Hauptströmungsrichtung 142. Ein Teilstrom des Entlastungsstroms wird an der Verzweigungsstelle 134 in der Weise entnommen, dass eine zumindest zeitweilige Richtungsumkehr für den Teilstrom, entgegen der Hauptströmungsrichtung 142, erzwungen wird. Dies kann wie dargestellt durch einen in die Rohrleitung 140 hineingeführten, ebenfalls rohrförmigen Entnahmestutzen 144 erfolgen, der eine oder mehrere entsprechend angeordnete und orientierte, beispielsweise schlitz- oder lamellenartige Einlassöffnungen 146 für den zu entnehmenden Teilstrom sowie einen kurzen Gegenstromabschnitt 148, in dem der entnommene Teilstrom entgegen der Hauptströmungsrichtung 142 strömen muss, aufweist. Der auf diese Weise entnommene Teilstrom (hier als Heizstrom bezeichnet) wird über den Leitungsabschnitt 150 der Zentralkammer 54 der Wärmetauscher-Sorbensfilter-Einheit 52 zugeführt, während der in Hauptströmungsrichtung 142 weiterströmende zweite Teilstrom (hier als Hauptstrom bezeichnet) über die Bypassleitung 136 an der Wärmetauscher-Sorbensfilter-Einheit 52 vorbeigeführt wird, diese also ohne Wärmeabgabe umgeht.

Durch die erzwungene Richtungsumkehr des Heizstroms im Vergleich zum Hauptstrom erfolgt nach dem Prinzip der Massenträgheitsabscheidung eine effektive Abscheidung von im Entlastungsstrom mitgeführten Partikeln aus dem Heizstrom. Der durch die strömungsmäßig nachgeschaltete Wärmetauscher-Sorbensfilter-Einheit 52 geführte Heizstrom ist damit weitgehend partikelfrei, so dass der Wärmeübergang an den dort befindlichen Wärmetauscherflächen 36, 48 auch ohne Kondensateinsprühung nur wenig beeinträchtigt wird. Die in der Bypassleitung 136 mitgeführten Partikel werden weiter stromabwärts größtenteils im Sand- oder Kiesbettfilter 114 aus dem Entlastungsstrom heraus gefiltert, so dass auch im Niederdruckbereich keine nennenswerte Beeinträchtigung der innenseitig in den Wärmetauscherrohren 78 liegenden Wärmetauscherflächen 48 des Überhitzungsabschnitts 50 erfolgt.

### Bezugszeichenliste

- 2: Kernkraftwerk
- 4: Sicherheitshülle
- 6: Innenraum
- 8: Druckentlastungssystem
- 10: Auslass
- 12: Entlastungsleitung
- 14: Sand- oder Kiesbettfilter
- 16: Filterkammer
- 18: Sorbensfilter
- 20: Kamin
- 22: Leitungsabschnitt
- 24: Vorfilter
- 26: Bypassleitung
- 28: Regelventil
- 30: Absperrventil
- 32: Einlass
- 34: Abzweigungsstelle
- 36: Wärmetauscherfläche
- 38: Hochdruckabschnitt
- 40: Drossel
- 42: Niederdruckabschnitt
- 44: Gastrockner
- 46: Kondensatsammelbehälter
- 48: Wärmetauscherfläche
- 50: Überhitzungsabschnitt
- 52: Wärmetauscher-Sorbensfilter-Einheit
- 54: Zentralkammer
- 56: Trennwand
- 58: Filterelement
- 60: Zuströmraum
- 62: Abströmraum
- 64: Zentralkammereinlass
- 66: Leitungsabschnitt
- 68: Zentralkammerauslass
- 70: Leitungsabschnitt
- 72: Leitungsabschnitt
- 74: Innenraum
- 76: Rippen
- 78: Wärmetauscherrohr
- 80: Gehäusedurchbrechung
- 82: Durchtrittsöffnung
- 84: Filterkammereinlass
- 86: Filterkammerauslass
- 88: Filterkammergehäuse
- 90: Leitungsabschnitt
- 92: Kondensatsammelbecken
- 94: Kondensatspiegel
- 96: Kondensatrückführleitung
- 98: Verjüngungsstelle
- 100: Kondensat
- 102: Steigabschnitt
- 104: Kondensatableitung
- 106: Zusatzheizeinrichtung
- 108: Vakuumbegrenzung
- 110: Zuströmbereich
- 112: Abströmbereich
- 114: Sand- oder Kiesbett
- 116: Kondensatseparator
- 118: Kondensatableitung
- 120: Sauggebläse
- 130: Düse
- 132: Zusatzheizung
- 134: Verzweigungsstelle
- 136: Bypassleitung
- 138: Einmündungsstelle
- 140: Rohrleitung
- 142: Hauptströmungsrichtung
- 144: Entnahmestutzen
- 146: Einlassöffnung
- 148: Gegenstromabschnitt
- 150: Leitungsabschnitt

## Patentansprüche

1. Verfahren zur Druckentlastung eines Kernkraftwerks (2) mit einer Sicherheitshülle (4) zum Einschluss von Aktivitätsträgern und mit einem Auslass (10) für einen Entlastungsstrom, wobei der Entlastungsstrom über eine mit einem Filtersystem versehene Entlastungsleitung (12) aus der Sicherheitshülle (4) in die Atmosphäre geführt wird, wobei das Filtersystem eine Filterkammer (16) mit einem Filterkammereinlass (84), einem Filterkammerauslass (86) und einem dazwischen liegenden Sorbensfilter (18) umfasst, wobei der Entlastungsstrom in einem Hochdruckabschnitt (38) der Entlastungsleitung (12) zumindest teilweise an der Filterkammer (16) vorbei geführt wird und diese dabei durch Wärmeübertrag beheizt wird, und wobei der Entlastungsstrom am Ende des Hochdruckabschnitts (38) durch Expansion an einer Drossel (40) entspannt und getrocknet wird,
**dadurch gekennzeichnet, dass** der Entlastungsstrom
- anschließend durch einen Sand- oder Kiesbettfilter (14) geleitet wird,
- anschließend in einem Überhitzungsabschnitt (50) an dem Hochdruckabschnitt (38) der Entlastungsleitung (12) vorbeigeführt und dabei durch Wärmeübertrag erhitzt wird,
- direkt anschließend in diesem Zustand durch die Filterkammer (16) mit dem Sorbensfilter (18) hindurch geleitet wird, und
- schließlich in die Atmosphäre ausgeblasen wird.

2. Verfahren nach Anspruch 1, wobei der Entlastungsstrom im Überhitzungsabschnitt (50) auf eine Temperatur erhitzt wird, die mindestens 10 °C, vorzugsweise 20 °C bis 50 °C, über der dort vorliegenden Taupunkttemperatur liegt.

3. Verfahren nach Anspruch 1 oder 2, wobei der Entlastungsstrom im Hochdruckabschnitt (40) durch eine Zentralkammer (54) geleitet wird, die von der Filterkammer (16) umgeben ist oder an sie angrenzt, und wobei der Entlastungsstrom im Überhitzungsabschnitt (50) durch in der Zentralkammer (54) angeordnete Wärmetauscherelemente, insbesondere Wärmetauscherrohre (78), geleitet wird.

4. Verfahren nach Anspruch 3, wobei der Entlastungsstrom im Überhitzungsabschnitt (50) im Gegenstrom oder Kreuzgegenstrom zu dem Entlastungsstrom im Hochdruckabschnitt (38) geführt wird.

5. Verfahren nach Anspruch 3 oder 4, wobei die Zentralkammer (54) einen Zentralkammereinlass (64) aufweist, durch den der Entlastungsstrom im Hochdruckabschnitt (38) in die Zentralkammer (54) eingeleitet wird, und wobei sich in der Zentralkammer (54) bildendes Kondensat in einem mit der Zentralkammer (54) verbundenen Kondensatsammelbecken (92) gesammelt und zumindest teilweise zu dem Zentralkammereinlass (64) zurückgeführt und als Tröpfchenregen oder Sprühnebel eingedüst wird.

6. Verfahren nach einem der Ansprüche 1 bis 5, wobei insbesondere im Volllastbetrieb in dem Hochdruckabschnitt (38) eine Strömungsgeschwindigkeit des Entlastungsstroms im Bereich von 10 m/s bis 50 m/s eingestellt wird.

7. Verfahren nach einem der Ansprüche 1 bis 6, wobei insbesondere im Volllastbetrieb in dem Überhitzungsabschnitt (50) eine Strömungsgeschwindigkeit des Entlastungsstroms im Bereich von 10 m/s bis 70 m/s eingestellt wird.

8. Verfahren nach einem der Ansprüche 1 bis 7, wobei der freie Strömungsquerschnitt der Drossel (40) derart eingestellt wird, dass der Druck im Hochdruckabschnitt (38) das zwei- bis fünffache des Drucks im Überhitzungsabschnitt (50) beträgt.

9. Verfahren nach einem der Ansprüche 1 bis 8, wobei der Entlastungstrom über einen Sorbensfilter (18) mit nicht wasserlöslicher Silberdotierung geführt wird.

10. Druckentlastungssystem (8) für ein Kernkraftwerk (2) mit einer Sicherheitshülle (4) zum Einschluss von Aktivitätsträgern und mit einem Auslass (10) für einen Entlastungsstrom, wobei an den Auslass (10) eine mit einem Filtersystem versehene Entlastungsleitung (12) angeschlossen ist, wobei das Filtersystem eine Filterkammer (16) mit einem Filterkammereinlass (84), einem Filterkammerauslass (86) und einem dazwischen liegenden Sorbensfilter (18) umfasst, wobei die Entlastungsleitung (12) einen Hochdruckabschnitt (38) umfasst, der zumindest in einem Teilabschnitt an der Filterkammer (16) vorbei geführt ist und mit dieser über Wärmetauscherflächen (36) in thermischer Wechselwirkung steht, und wobei am Ende des Hochdruckabschnitts (38) eine Drossel (40) in die Entlastungsleitung (12) geschaltet ist,
**dadurch gekennzeichnet, dass**
- stromabwärts der Drossel (40) ein Sand- oder Kiesbettfilter (14) in die Entlastungsleitung (12) geschaltet ist,
- die Entlastungsleitung (12) weiter stromabwärts einen Überhitzungsabschnitt (50) aufweist, der über Wärmetauscherflächen (48) in thermischer Wechselwirkung mit dem Hochdruckabschnitt (38) steht,
- die Entlastungsleitung (12) unmittelbar stromabwärts des Überhitzungsabschnitts (50) in den Filterkammereinlass (84) mündet, und
- der Filterkammerauslass (86) mit einer in die Atmosphäre führenden Ausblasöffnung verbunden ist.

11. Druckentlastungssystem (8) nach Anspruch 10, bei dem die Wärmetauscherflächen (48) zwischen dem Hochdruckabschnitt (38) und dem Überhitzungsabschnitt (50) derart dimensioniert sind, dass der bei Auslegungs-Störfallbedingungen sich einstellende Entlastungsstrom im Überhitzungsabschnitt (50) auf eine Temperatur erhitzt wird, die mindestens 10 °C, vorzugsweise 20 °C bis 50 °C, über der dort vorliegenden Taupunkttemperatur liegt.

12. Druckentlastungssystem (8) nach Anspruch 10 oder 11, wobei die Filterkammer (16) eine zur Durchleitung des Entlastungsstroms im Hochdruckabschnitt (38) vorgesehene Zentralkammer (54) umgibt oder an sie angrenzt, und wobei die Entlastungsleitung (12) im Bereich des Überhitzungsabschnitts (50) eine Anzahl von in der Zentralkammer (54) angeordneten oder in diese hineinragenden Wärmetauscherelementen aufweist.

13. Druckentlastungssystem (8) nach Anspruch 12, wobei die Wärmetauscherelemente in Relation zur Zentralkammer (54) derart ausgerichtet sind, dass der Entlastungsstrom im Überhitzungsabschnitt (50) im Gegenstrom oder Kreuzgegenstrom zu dem Entlastungsstrom im Hochdruckabschnitt (38) geführt wird.

14. Druckentlastungssystem (8) nach Anspruch 12 oder 13, wobei die Zentralkammer (54) einen Zentralkammereinlass (64) aufweist, durch den der Entlastungsstrom im Hochdruckabschnitt (38) in die Zentralkammer (54) eingeleitet wird, und wobei an ein mit der Zentralkammer (54) verbundenes Kondensatsammelbecken (92) eine Kondensatrückführleitung (96) angeschlossen ist, deren anderes Ende mit einer im Bereich des Zentralkammereinlasses (64) angeordneten Kondensateinsprühvorrichtung, insbesondere einer Düse (130), verbunden ist.

15. Druckentlastungssystem (8) nach einem der Ansprüche 10 bis 14, wobei zwischen dem Sand- oder Kiesbettfilter (14) und dem Überhitzungsabschnitt (50) ein Gastrockner (44) in die Entlastungsleitung (12) geschaltet ist.

16. Druckentlastungssystem (8) nach einem der Ansprüche 10 bis 15, wobei der Sorbensfilter (18) ein Sorbensmaterial auf Zeolith-Basis, vorzugsweise mit nicht-wasserlöslicher Silberdotierung, umfasst.

17. Druckentlastungssystem (8) nach einem der Ansprüche 10 bis 16, wobei der Sorbensfilter (18) ein Sorbensmaterial mit Silbernitrat-Dotierung umfasst.

18. Kernkraftwerk (2) mit einer Sicherheitshülle (4) zum Einschluss von Aktivitätsträgern und mit einem Druckentlastungssystem (6) nach einem der Ansprüche 10 bis 17.

## Claims

1. Method for pressure relief in a nuclear power plant (2) comprising a containment structure (4) for enclosing activity carriers and having an outlet (10) for a relief flow, the relief flow being guided out of the containment structure (4) into the atmosphere via a relief line (12) provided with a filter system, the filter system comprising a filter chamber (16) having a filter-chamber inlet (84), a filter-chamber outlet (86) and a sorbent filter (18) which is arranged therebetween, the relief flow in a high-pressure portion (38) of the relief line (12) being guided, at least in part, past the filter chamber (16) and the filter chamber being heated by means of heat transfer, and the relief flow being expanded at the end of the high-pressure portion (38) by expansion at a throttle (40), and being dried,
**characterised in that** the relief flow
- is then guided through a sand-bed filter or a gravel-bed filter (14);
- is then guided in a superheating portion (50) past the high-pressure portion (38) of the relief line (12) and in the process is heated by means of heat transfer;
- is guided in this state directly thereafter through the filter chamber (16) having the sorbent filter (18), and
- is finally blown out into the atmosphere.

2. Method according to claim 1, wherein the relief flow in the superheating portion (50) is heated to a temperature which is at least 10 °C, preferably from 20 °C to 50 °C, above the dew-point temperature present there.

3. Method according to either claim 1 or claim 2, wherein the relief flow in the high-pressure portion (40) is guided through a central chamber (54) which is surrounded by or adjoins the filter chamber (16), and wherein the relief flow in the superheating portion (50) is guided through heat-exchanger elements, in particular heat-exchanger tubes (78), which are arranged in the central chamber (54).

4. Method according to claim 3, wherein the relief flow in the superheating portion (50) is guided in either a counter-flow or a cross-counter-flow relative to the relief flow in the high-pressure portion (38).

5. Method according to either claim 3 or claim 4, wherein the central chamber (54) comprises a central-chamber inlet (64), through which the relief flow in the high-pressure portion (38) is guided into the central chamber (54), and wherein condensate forming in the central chamber (54) is collected in a condensate collection tank (92) which is connected to the central chamber (54) and is returned, at least in part, to the central-chamber inlet (64) and injected as a fine spray of water or a mist of water.

6. Method according to any of claims 1 to 5, wherein a flow velocity of the relief flow is set within a range of from 10 m/s to 50 m/s in the high-pressure portion (38), in particular when operating at full load.

7. Method according to any of claims 1 to 6, wherein a flow velocity of the relief flow is set within a range of from 10 m/s to 70 m/s in the superheating portion (50), in particular when operating at full load.

8. Method according to any of claims 1 to 7, wherein the free flow cross section of the throttle (40) is set such that the pressure in the high-pressure portion (38) is from twice to five times the pressure in the superheating portion (50).

9. Method according to any of claims 1 to 8, wherein the relief flow is guided over a sorbent filter (18) having non-water-soluble silver doping.

10. Pressure-relief system (8) for a nuclear power plant (2) comprising a containment structure (4) for enclosing activity carriers and having an outlet (10) for a relief flow, a relief line (12), provided with a filter system, being connected to the outlet (10), the filter system comprising a filter chamber (16) having a filter-chamber inlet (84), a filter-chamber outlet (86), and a sorbent filter (18) which is arranged therebetween, the relief line (12) comprising a high-pressure portion (38) which is guided past the filter chamber (16), at least in a portion, and interacts thermally with the filter chamber via heat-exchanger surfaces (36), and a throttle (40) being connected into the relief line (12) at the end of the high-pressure portion (38),
**characterised in that**:
- a sand-bed filter or a gravel-bed filter (14) is connected into the relief line (12) downstream of the throttle (40);
- the relief line (12) comprises, further downstream, a superheating portion (50) which interacts thermally with the high-pressure portion (38) via heat-exchanger surfaces (48);
- the relief line (12) opens into the filter-chamber inlet (84) directly downstream of the superheating portion (50); and
- the filter-chamber outlet (86) is connected to a blow-out opening which leads into the atmosphere.

11. Pressure-relief system (8) according to claim 10, in which the heat-exchanger surfaces (48) between the high-pressure portion (38) and the superheating portion (50) are dimensioned such that the relief flow in the superheating portion (50), which relief flow occurs with design-basis-accident conditions, is heated to a temperature which is at least 10 °C, preferably from 20 °C to 50 °C, above a dew-point temperature present there.

12. Pressure-relief system (8) according to either claim 10 or claim 11, wherein the filter chamber (16) surrounds or adjoins a central chamber (54), provided for guiding the relief flow in the high-pressure portion (38), and wherein the relief line (12) in the region of the superheating portion (50) comprises a number of heat-exchanger elements arranged in the central chamber (54) or projecting into said chamber.

13. Pressure-relief system (8) according to claim 12, wherein the heat-exchanger elements are oriented relative to said central chamber (54) such that the relief flow in the superheating portion (50) is guided in a counter-flow or cross-counter-flow relative to the relief flow in the high-pressure portion (38).

14. Pressure-relief system (8) according to either claim 12 or claim 13, wherein the central chamber (54) comprises a central-chamber inlet (64), through which the relief flow in the high-pressure portion (38) is guided into the central chamber (54), and wherein a condensate return line (96) is connected to a condensate collection tank (92) which is connected to the central chamber (54), the other end of the condensate return line being connected to a condensate spray device, in particular a nozzle (130), arranged in the region of the central-chamber inlet (64).

15. Pressure-relief system (8) according to any of claims 10 to 14, wherein a gas dryer (44) is connected into the relief line (12) between the sand-bed bed filter or gravel-bed filter (14) and the superheating portion (50).

16. Pressure-relief system (8) according to any of claims 10 to 15, wherein the sorbent filter (18) comprises a zeolite-based sorbent material, preferably having non-water-soluble silver doping.

17. Pressure-relief system (8) according to any of claims 10 to 16, wherein the sorbent filter (18) comprises a sorbent material having silver-nitrate doping.

18. Nuclear power plant (2), comprising a containment structure (4) for enclosing activity carriers and comprising a pressure-relief system (6) according to any of claims 10 to 17.

## Revendications

1. Procédé destiné à la dépressurisation d'une centrale nucléaire (2) avec une enceinte de confinement (4) destiné au confinement de sources d'activités et avec une sortie (10) pour un flux de décharge, dans lequel le flux de décharge est dirigé hors de l'enceinte de confinement (4) dans l'atmosphère par l'intermédiaire d'une conduite de décharge (12) pourvue d'un système de filtration, dans lequel le système de filtration comprend une chambre de filtration (16) avec une entrée de la chambre de filtration (84), une sortie de la chambre de filtration (86) et un filtre sorbant (18) se trouvant entre les deux, dans lequel le flux de décharge est dirigé, tout au moins en partie, devant la chambre de filtration (16), dans une section de haute pression (38) de la conduite de décharge (12), et cette chambre de filtration (16) est ainsi chauffée par le transfert de chaleur, et dans lequel le flux de décharge est détendu par expansion au niveau d'un étrangleur (40), à l'extrémité de la section de haute pression (38), et ledit flux est séché,
**caractérisé en ce que** le flux de décharge
- est dirigé ensuite à travers un filtre composé de sable ou d'un lit de gravier (14),
- est dirigé ensuite, dans une section de surchauffe (50), devant la section de haute pression (38) de la conduite de décharge (12) et est ainsi chauffé par le transfert de chaleur,
- est conduit ensuite directement dans cet état à travers la chambre de filtration (16) avec le filtre sorbant (18), et
- est finalement expulsé dans l'atmosphère.

2. Procédé selon la revendication 1, dans lequel le flux de décharge est chauffé dans la section de surchauffe (50) à une température qui est au moins 10 °C, de préférence au moins 20 °C à 50 °C supérieure à la température du point de rosée qui y est présente.

3. Procédé selon la revendication 1 ou 2, dans lequel le flux de décharge est dirigé dans la section de haute pression (40) à travers une chambre centrale (54) qui est entourée par la chambre de filtration (16) ou qui lui est adjacente, et dans lequel le flux de décharge est dirigé dans la section de surchauffe (50) à travers des éléments échangeurs de chaleur, en particulier à travers des tubes échangeurs de chaleur (78), disposés dans la chambre centrale (54).

4. Procédé selon la revendication 3, dans lequel le flux de décharge est dirigé dans la section de surchauffe (50) à contre-courant ou à contre-courant croisé par rapport au flux de décharge dans la section de haute pression (38).

5. Procédé selon la revendication 3 ou 4, dans lequel la chambre centrale (54) présente une entrée de la chambre centrale (64), à travers laquelle le flux de décharge dans la section de haute pression (38) est introduit dans la chambre centrale (54), et dans lequel le condensat se formant dans la chambre centrale (54) est collecté dans un bassin collecteur de condensat (92) relié à la chambre centrale (54) et est renvoyé, tout au moins en partie, vers l'entrée de la chambre centrale (64) et est injecté sous la forme de pluie de gouttelettes ou de brouillard pulvérisé.

6. Procédé selon l'une des revendications 1 à 5, dans lequel une vitesse de débit du flux de décharge est réglée dans une plage comprise entre 10 m/s et 50 m/s dans la section de haute pression (38), en particulier durant l'exploitation à pleine puissance.

7. Procédé selon l'une des revendications 1 à 6, dans lequel une vitesse de débit du flux de décharge est réglée dans une plage comprise entre 10 m/s et 70 m/s dans la section de surchauffe (50), en particulier durant l'exploitation à pleine puissance.

8. Procédé selon l'une des revendications 1 à 7, dans lequel la section transversale libre d'écoulement de l'étrangleur (40) est réglée de telle sorte que la pression dans la section de haute pression (38) se situe dans une fourchette comprise entre le double et le quintuple de la pression dans la section de surchauffe (50).

9. Procédé selon l'une des revendications 1 à 8, dans lequel le flux de décharge est dirigé à travers un filtre sorbant (18) avec un dopage en argent non soluble dans l'eau.

10. Système de décharge de la pression (8) pour une centrale nucléaire (2) avec une enceinte de confinement (4) destiné au confinement de sources d'activités et avec une sortie (10) pour un flux de décharge, dans lequel une conduite de décharge (12) équipée d'un système de filtration est raccordée à la sortie (10), dans lequel le système de filtration comprend une chambre de filtration (16) avec une entrée de la chambre de filtration (84), une sortie de la chambre de filtration (86) et un filtre sorbant (18) se trouvant entre les deux, dans lequel la conduite de décharge (12) comprend une section de haute pression (38), qui est dirigée, tout au moins dans une section partielle, devant la chambre de filtration (16) et se trouve dans une interaction thermique avec celle-ci par l'intermédiaire de surfaces d'échange de chaleur (36), et dans lequel un étrangleur (40) est mis en circuit dans la conduite de décharge (12), à l'extrémité de la section de haute pression (38),
**caractérisé en ce que**
- un filtre composé de sable ou d'un lit de gravier (14) est mis en circuit dans la conduite de décharge (12), en aval de l'étrangleur (40),
- la conduite de décharge (12) présente plus loin en aval une section de surchauffe (50), qui se trouve dans une interaction thermique avec la section de haute pression (38) par l'intermédiaire de surfaces d'échange de chaleur (48),
- la conduite de décharge (12) aboutit directement dans l'entrée de la chambre de filtration (84), en aval de la section de surchauffe (50), et
- la sortie de la chambre de filtration (86) est raccordée à un orifice d'échappement d'air débouchant dans l'atmosphère.

11. Système de décharge de la pression (8) selon la revendication 10, dans lequel les surfaces d'échange de chaleur (48) situées entre la section de haute pression (38) et la section de surchauffe (50) sont dimensionnées de telle sorte que le flux de décharge, s'établissant en cas de conditions d'accident de dimensionnement, est chauffé dans la section de surchauffe (50) à une température qui est au moins 10 °C, de préférence au moins 20 °C à 50 °C supérieure à la température du point de rosée qui y est présente.

12. Système de décharge de la pression (8) selon la revendication 10 ou 11, dans lequel la chambre de filtration (16) entoure une chambre centrale (54), ou est adjacente à cette chambre centrale, prévue afin de faire passer le flux de décharge dans la section de haute pression (38), et dans lequel la conduite de décharge (12) présente, dans la zone de la section de surchauffe (50), un certain nombre d'éléments échangeurs de chaleur disposés dans la chambre centrale (54) ou pénétrant dans celle-ci.

13. Système de décharge de la pression (8) selon la revendication 12, dans lequel les éléments échangeurs de chaleur sont alignés en relation avec la chambre centrale (54), de telle sorte que le flux de décharge est dirigé dans la section de surchauffe (50) à contre-courant ou à contre-courant croisé par rapport au flux de décharge dans la section de haute pression (38).

14. Système de décharge de la pression (8) selon la revendication 12 ou 13, dans lequel la chambre centrale (54) présente une entrée de la chambre centrale (64), à travers laquelle le flux de décharge dans la section de haute pression (38) est introduit dans la chambre centrale (54), et dans lequel une canalisation de retour des condensats (96) est reliée à un bassin collecteur de condensat (92) raccordé à la chambre centrale (54), et dont l'autre extrémité est raccordée à un dispositif de pulvérisation des condensats, en particulier à une buse (130), disposée dans la zone de l'entrée de la chambre centrale (64).

15. Système de décharge de la pression (8) selon l'une des revendications 10 à 14, dans lequel un dessiccateur de gaz (44) est mis en circuit dans la conduite de décharge (12), entre le filtre composé de sable ou d'un lit de gravier (14) et la section de surchauffe (50).

16. Système de décharge de la pression (8) selon l'une des revendications 10 à 15, dans lequel le filtre sorbant (18) comprend un matériau sorbant à base de zéolithe, de préférence avec un dopage en argent non soluble dans l'eau.

17. Système de décharge de la pression (8) selon l'une des revendications 10 à 16, dans lequel le filtre sorbant (18) comprend un matériau sorbant avec un dopage de nitrate d'argent.

18. Centrale nucléaire (2) avec une enceinte de confinement (4) destinée au confinement de sources d'activités et avec un système de décharge de la pression (6) selon l'une des revendications 10 à 17.
